# EUROPEAN PATENT SPECIFICATION

(11) **EP 2 359 642 B1**
(45) Date of publication and mention of the grant of the patent: **12.06.2013**
(21) Application number: 09744859.1
(22) Date of filing: 23.10.2009
(51) Int. Cl.: H04W 40/22, H04L 29/12, H04L 29/06, H04W 16/26, H04W 72/04, H04W 36/00

(54) **CELL RELAY NETWORK ATTACHMENT PROCEDURES**
ZELLENRELAY-NETZANBINDUNGSVERFAHREN
PROCÉDURES DE CONNEXION À UN RÉSEAU ET RELAIS DE CELLULE

(30) Priority: 24.10.2008 US 108287 P; 22.10.2009 US 604198
(43) Date of publication of application: 24.08.2011
(73) Proprietor: QUALCOMM Incorporated, San Diego, California 92121 (US)
(72) Inventor: ULUPINAR, Fatih, San Diego, California 92121 (US); HORN, Gavin B., San Diego, California 92121 (US); AGASHE, Parag A., San Diego, California 92121 (US); TENNY, Nathan E., San Diego, California 92121 (US); SHI, Yongsheng, San Diego, California 92121 (US)
(74) Representative: Wegner, Hans
(86) International application number: PCT/US2009/061939
(87) International publication number: WO 2010/048571

(56) References cited:
- EP-A- 1 921 807
- WO-A-2008/125729
- WO-A-2009/134178
- DE-U1-202007 009 672
- ERICSSON: "A discussion on some technology components for LTE-Advanced" 3GPP DRAFT; R1-082024 {LTE-ADVANCED TECHNOLOGY COMPONENTS}, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kansas City, USA; 20080514, 14 May 2008 (2008-05-14), XP050110365
- RAN3 LTE-A RAPPORTEUR: "LTE-A RAN3 Baseline Document" 3GPP DRAFT; R3-091447, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090509, 9 May 2009 (2009-05-09), XP050341769

## Description

### BACKGROUND

### Field

The following description relates generally to wireless communications, and more particularly to wireless network attachment procedures for cell relays.

### Background

Wireless communication systems are widely deployed to provide various types of communication content such as, for example, voice, data, and so on. Typical wireless communication systems may be multiple-access systems capable of supporting communication with multiple users by sharing available system resources (e.g., bandwidth, transmit power, ...). Examples of such multiple-access systems may include code division multiple access (CDMA) systems, time division multiple access (TDMA) systems, frequency division multiple access (FDMA) systems, orthogonal frequency division multiple access (OFDMA) systems, and the like. Additionally, the systems can conform to specifications such as third generation partnership project (3GPP), 3GPP long term evolution (LTE), ultra mobile broadband (UMB), and/or multi-carrier wireless specifications such as evolution data optimized (EV-DO), one or more revisions thereof, *etc.*

Generally, wireless multiple-access communication systems may simultaneously support communication for multiple mobile devices. Each mobile device may communicate with one or more access points (*e.g*., base stations) *via* transmissions on forward and reverse links. The forward link (or downlink) refers to the communication link from access points to mobile devices, and the reverse link (or uplink) refers to the communication link from mobile devices to access points. Further, communications between mobile devices and access points may be established *via* single-input single-output (SISO) systems, multiple-input single-output (MISO) systems, multiple-input multiple-output (MIMO) systems, and so forth. Access points, however, can be limited in geographic coverage area as well as resources such that mobile devices near edges of coverage and/or devices in areas of high traffic can experience degraded quality of communications from an access point.

Cell relays can be provided to expand network capacity and coverage area by facilitating communication between mobile devices and access points. For example, a cell relay can establish a backhaul link with a donor access point, which can provide access to a number of cell relays, and the cell relay can establish an access link with one or more mobile devices or additional cell relays. To mitigate modification to backend core network components, communication interfaces, such as S1-U, can terminate at the donor access point. Thus, the donor access point appears as a normal access point to backend network components. To this end, the donor access point can route packets from the backend network components to the cell relays for communicating to the mobile devices. An "3P aware" base station is also disclosed in WO 2008/12 57 29.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In accordance with one or more aspects and corresponding disclosure thereof, various aspects are described in connection with facilitating attaching a cell relay to a wireless network. In particular, cell relays can perform attachment procedures similar to user equipment (UE) or other devices to establish connection with a wireless network *via* a donor node and/or one or more intermediary cell relays. In an example, a cell relay can request or otherwise establish an identifier for the cell relay during attachment to facilitate subsequent routing of packets to the cell relay through the donor node and/or one or more intermediary cell relays.

According to related aspects, a method is provided that includes initiating an attachment procedure to a wireless network using an upstream eNB and establishing at least a portion of an identifier with the upstream eNB during the attachment procedure. The method further includes receiving one or more packets from the upstream eNB based at least in part on the portion of the identifier.

Another aspect relates to a wireless communications apparatus. The wireless communications apparatus can include at least one processor configured to request attachment to a wireless network from an upstream eNB and establish at least a portion of an identifier with the upstream eNB during attachment. The at least one processor is further configured to receive one or more packets from the upstream eNB based at least in part on the portion of the identifier. The wireless communications apparatus also comprises a memory coupled to the at least one processor.

Yet another aspect relates to an apparatus. The apparatus includes means for attaching to a wireless network through an upstream eNB and means for establishing at least a portion of an identifier with the upstream eNB during attachment. The apparatus also includes means for forwarding one or more packets received from the upstream eNB based at least in part on the portion of the identifier.

Still another aspect relates to a computer program product, which can have a computer-readable medium including code for causing at least one computer to initiate an attachment procedure to a wireless network using an upstream eNB. The computer-readable medium can also comprise code for causing the at least one computer to establish at least a portion of an identifier with the upstream eNB during the attachment procedure and code for causing the at least one computer to receive one or more packets from the upstream eNB based at least in part on the portion of the identifier.

Moreover, an additional aspect relates to an apparatus including an attachment requesting component that executes an attachment procedure to a wireless network with an upstream eNB. The apparatus can further include an ID requesting component that establishes at least a portion of an identifier with the upstream eNB during attachment and a packet routing component that forwards one or more packets received from the upstream eNB based at least in part on the portion of the identifier.

According to another aspect, a method is provided that includes obtaining at least a portion of an identifier for a downstream relay eNB during an attachment procedure for the downstream relay eNB to a wireless network. The method further includes storing the portion of the identifier in a routing table with an identifier for a next downstream relay eNB in a communication path to the downstream relay eNB and transmitting the portion of the identifier to the next downstream relay eNB as part of the attachment procedure

Another aspect relates to a wireless communications apparatus. The wireless communications apparatus can include at least one processor configured to obtain at least a portion of an identifier for a downstream relay eNB during a wireless network attachment procedure for the downstream relay eNB and store an association between the portion of the identifier and an identifier of a next downstream relay eNB in a communication path to the downstream relay eNB in a routing table. The at least one processor is further configured to transmit the portion of the identifier to the next downstream relay eNB during the wireless network attachment procedure. The wireless communications apparatus also comprises a memory coupled to the at least one processor.

Yet another aspect relates to an apparatus. The apparatus includes means for obtaining at least a portion of an identifier for a downstream relay eNB during a wireless network attachment procedure. The apparatus also includes means for storing the portion of the identifier with an identifier of a next downstream relay eNB in a communications path to the downstream relay eNB in a routing table, wherein the means for obtaining further forwards the portion of the identifier to the next downstream relay eNB.

Still another aspect relates to a computer program product, which can have a computer-readable medium including code for causing at least one computer to obtain at least a portion of an identifier for a downstream relay eNB during an attachment procedure for the downstream relay eNB to a wireless network. The computer-readable medium can also comprise code for causing the at least one computer to store the portion of the identifier in a routing table with an identifier for a next downstream relay eNB in a communication path to the downstream relay eNB and code for causing the at least one computer to transmit the portion of the identifier to the next downstream relay eNB as part of the attachment procedure.

Moreover, an additional aspect relates to an apparatus including an ID assigning component that obtains at least a portion of an identifier for a downstream relay eNB during a wireless network attachment procedure. The apparatus can further include a routing table component that stores the portion of the identifier with an identifier of a next downstream relay eNB in a communications path to the downstream relay eNB in a routing table, wherein the ID assigning component further forwards the portion of the identifier to the next downstream relay eNB.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed and this description is intended to include all such aspects and their equivalents.

### BRIEF DESCRIPTION OF THE DRAWINGS

FIG. 1 is an illustration of an example wireless communications system that facilitates providing relays for wireless networks.

FIG. 2 is an illustration of an example wireless communications system that facilitates establishing an identifier for a relay eNB during network attachment.

FIG. 3 is an illustration of an example wireless communications system that establishes multiple prefixes of an identifier for a relay eNB during network attachment.

FIG. 4 is an illustration of an example wireless communications system that facilitates requesting identifier assignment during network attachment.

FIG. 5 is an illustration of an example wireless communications system that facilitates establishing a relay identifier when attaching to a network.

FIG. 6 is an illustration of an example wireless communications system that requests relay identifier assignment during network attachment.

FIG. 7 is an illustration of an example wireless communications system that utilizes cell relays to provide access to a wireless network.

FIG. 8 is an illustration of example protocol stacks that facilitate providing cell relay functionality for data plane communications.

FIG. 9 is an illustration of example protocol stacks that facilitate providing cell relay functionality for data plane communications using a relay protocol.

FIG. 10 is an illustration of an example methodology that establishes an identifier during network attachment.

FIG. 11 is an illustration of an example methodology that provides an established identifier during network attachment.

FIG. 12 is an illustration of a wireless communication system in accordance with various aspects set forth herein.

FIG. 13 is an illustration of an example wireless network environment that can be employed in conjunction with the various systems and methods described herein.

FIG. 14 is an illustration of an example system that facilitates establishing an identifier for subsequent packet routing during network attachment.

FIG. 15 is an illustration of an example system that facilitates providing an established identifier to one or more downstream nodes during network attachment.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM , etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g*., mobile-to-mobile) *ad hoc* network systems often using unpaired unlicensed spectrums, 802.xx wireless LAN, BLUETOOTH and any other short- or long- range, wireless communication techniques.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

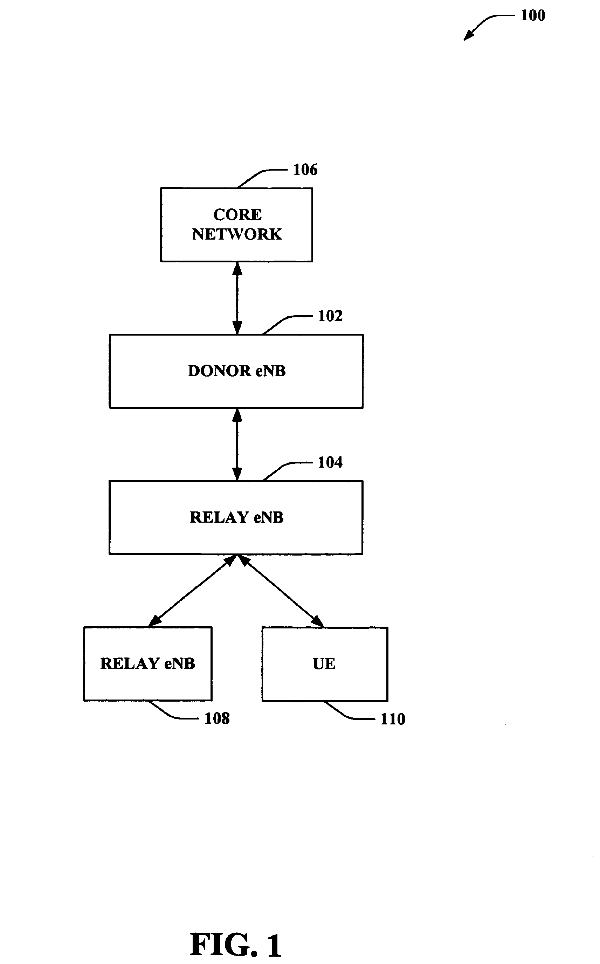

Referring to **Fig. 1**, a wireless communication system 100 is illustrated that facilitates providing relay functionality in wireless networks. System 100 includes a donor eNB 102 that provides one or more relay eNBs, such as relay eNB 104, with access to a core network 106. Similarly, relay eNB 104 can provide one or more disparate relay eNBs, such as relay eNB 108, or UEs, such as UE 110, with access to the core network 106 *via* donor eNB 102. Donor eNB 102, which can also be referred to as a cluster eNB, can communicate with the core network 106 over a wired or wireless backhaul link, which can be an LTE or other technology backhaul link. In one example, the core network 106 can be a 3GPP LTE or similar technology network.

Donor eNB 102 can additionally provide an access link for relay eNB 104, which can also be wired or wireless, LTE or other technologies, and the relay eNB 104 can communicate with the donor eNB 102 using a backhaul link over the access link of the donor eNB 102. Relay eNB 104 can similarly provide an access link for relay eNB 108 and/or UE 110, which can be a wired or wireless LTE or other technology link. In one example, donor eNB 102 can provide an LTE access link, to which relay eNB 104 can connect using an LTE backhaul, and relay eNB 104 can provide an LTE access link to relay eNB 108 and/or UE 110. Donor eNB 102 can connect to the core network 106 over a disparate backhaul link technology. Relay eNB 108 and/or UE 110 can connect to the relay eNB 104 using the LTE access link to receive access to core network 106, as described. A donor eNB and connected relay eNBs can be collectively referred to herein as a cluster.

According to an example, relay eNB 104 can connect to a donor eNB 102 at the link layer (*e.g*., media access control (MAC) layer) as would a UE in regular LTE configurations. In this regard, donor eNB 102 can be a regular LTE eNB requiring no changes at the link layer or related interface (*e.g*., E-UTRA-Uu) to support the relay eNB 104. In addition, relay eNB 104 can appear to UE 110 as a regular eNB at the link layer, such that no changes are required for UE 110 to connect to relay eNB 104 at the link layer, for example. In addition, relay eNB 104 can configure procedures for resource partitioning between access and backhaul link, interference management, idle mode cell selection for a cluster, and/or the like.

With respect to transport layer communications, transport protocols related to relay eNB 108 or UE 110 communications can terminate at the donor eNB 102, referred to as cell relay functionality, since the relay eNB 104 is like a cell of the donor eNB 102. For example, in a cell relay configuration, donor eNB 102 can receive communications for the relay eNB 104 from the core network 106, terminate the transport protocol, and forward the communications to the relay eNB 104 over a disparate transport layer keeping the application layer substantially intact. It is to be appreciated that the forwarding transport protocol type can be the same as the terminated transport protocol type, but is a different transport layer established with the relay eNB 104.

Relay eNB 104 can determine a relay eNB or UE related to the communications, and provide the communications to the relay eNB or UE (*e.g*., based on an identifier thereof within the communications). Similarly, donor eNB 102 can terminate the transport layer protocol for communications received from relay eNB 104, translate the communications to a disparate transport protocol, and transmit the communications over the disparate transport protocol to the core network 106 with the application layer intact for relay eNB 104 as a cell relay. In these examples, where relay eNB 104 is communicating with another relay eNB, the relay eNB 104 can support application protocol routing to ensure communications reach the correct relay eNB.

Moreover, application layer protocols can terminate at upstream eNBs. Thus, for example, application layer protocols for relay eNB 108 and UE 110 can terminate at relay eNB 104, and similarly for relay eNB 104 can terminate at donor eNB 102. The transport and application layer protocols, for example, can relate to S1-U, S1-MME, and/or X2 interfaces. S1-U interface can be utilized to communicate in a data plane between a node and a serving gateway (not shown) of the core network 106. S1-MME interface can be utilized for control plane communications between a node and a mobility management entity (MME) (not shown) of the core network 106. X2 interface can be utilized for communications between eNBs. In addition, for example, donor eNB 102 can communicate with other relay eNBs to allow communications therebetween over the access network (*e.g*., relay eNB 104 can communicate with one or more additional relay eNBs connected to donor eNB 102).

Initially, relay eNB 104 can attach to donor eNB 102 to receive access to core network 106. In one example, relay eNB 104 can perform similar attachment procedures with donor eNB 102 as a UE. As part of the attachment procedure, for example, relay eNB 104 can establish an identifier with donor eNB 102. In one example, donor eNB 102 can assign a portion of the identifier to relay eNB 104. Additionally or alternatively, relay eNB 104 can generate a portion of the identifier. In another example, relay eNB 104 can request a certain identifier. In any case, donor eNB 102 can store an association between the established identifier for the relay eNB 104 and a radio identifier (*e.g.,* cell radio network temporary identifier (C-RNTI)) for the next downstream relay eNB in the communication path to relay eNB 104 (which is relay eNB 104 in this example). Donor eNB 102 can subsequently include the established identifier for relay eNB 104 in communication with the core network 106, and core network 106 can include the established identifier in responding or other related communications for the relay eNB 104. Upon receiving such communications from core network 106, donor eNB 102 can extract the established identifier and determine the radio identifier of the downstream eNB from the stored associations. Donor eNB 102 can accordingly route packets to relay eNB 104 using the radio identifier.

In another example, relay eNB 108 can attach to relay eNB 104 for access to core network 106. Similarly, donor eNB 102 and relay eNB 108 can establish an identifier for relay eNB 108 during the attachment procedure, as described. Donor eNB 102 can store an association between the established identifier of relay eNB 108 and a radio identifier of the next downstream eNB, which is relay eNB 104 in this example. In addition, relay eNB 104 can store an association between the established identifier for relay eNB 108 and its next downstream relay eNB in the communication path to relay eNB 108, which is relay eNB 108 in this example. Thus, donor eNB 102 can similarly route incoming packets from core network 106 that have the established identifier for relay eNB 108 to relay eNB 104, and relay eNB 104 can route the packets to relay eNB 108 based on the established identifier.

According to an example, the established identifier can be a tunnel endpoint identifier (TEID) assigned by donor eNB 102. In another example, a TEID for relay eNB 108 can include a prefix portion assigned by the donor eNB 102 and a suffix portion assigned by the relay eNB 108 (or *vice versa*). Indeed, substantially any algorithmic combination of a portion generated by the donor eNB 102 and a portion generated by the relay eNB 108 can be utilized. Thus, for example, relay eNB 108 can request a TEID prefix form donor eNB 102 during the attachment procedure. Subsequently, relay eNB 108 can specify a suffix portion of the TEID that relates to a UE connected to the relay eNB 108. In this example, donor eNB 102 can transmit the entire TEID with prefix and suffix to core network 106 based on a request received from relay eNB 108, *via* relay eNB 104. Upon receiving a response from core network 106, donor eNB 102 can route the packet to relay eNB 108, *via* relay eNB 104, as described, based on the TEID prefix; relay eNB 108 can utilize the suffix upon receiving the response to route the packet to the appropriate UE.

In another example, relay and donor eNBs in a communication path from relay eNB 108 can each assign a prefix in a portion of the TEID. Thus, using the previous example, relay eNB 104 and donor eNB 102 can assign a portion of the prefix for the TEID to relay eNB 108 upon request from relay eNB 108 during the attachment procedure. In this regard, upon receiving packets with the TEID, donor eNB 102 can extract its portion of the prefix, associate the packets with relay eNB 104 (*e.g., via* a routing table, as described above), and transmit the packets to relay eNB 104. Similarly, relay eNB 104 can extract its portion of the TEID, associate the packets with relay eNB 108 (*e.g., via* a routing table, as described above), and transmit the packets to relay eNB 108. Relay eNB 108 can forward the packets to a UE or other device based on an assigned suffix where appropriate, as described.

In yet another example, donor eNB 102 can assign a TEID for each relay eNB, such as relay eNB 108. In this example, donor eNB 102 and relay eNB 104 both store the TEID along with the C-RNTI of the next downstream relay eNB, as described, during attachment for relay eNB 108. Similarly, in an example, relay eNB 108 can request assignment of a TEID, and donor eNB 102 can accept or reject the request during attachment for relay eNB 108. In one example, donor eNB 102, where it rejects the TEID (*e.g.*, because it is in use or invalid), can provide a useable TEID in the rejection. In either case, for example, similar routing can be utilized as where the donor eNB 102 assigns the TEID, described above. Moreover, it is to be appreciated that the established identifier can be utilized in a newly defined relay protocol to facilitate communicating between relay eNB 108 and donor eNB 102, as well as intermediary relay eNBs, as described herein.

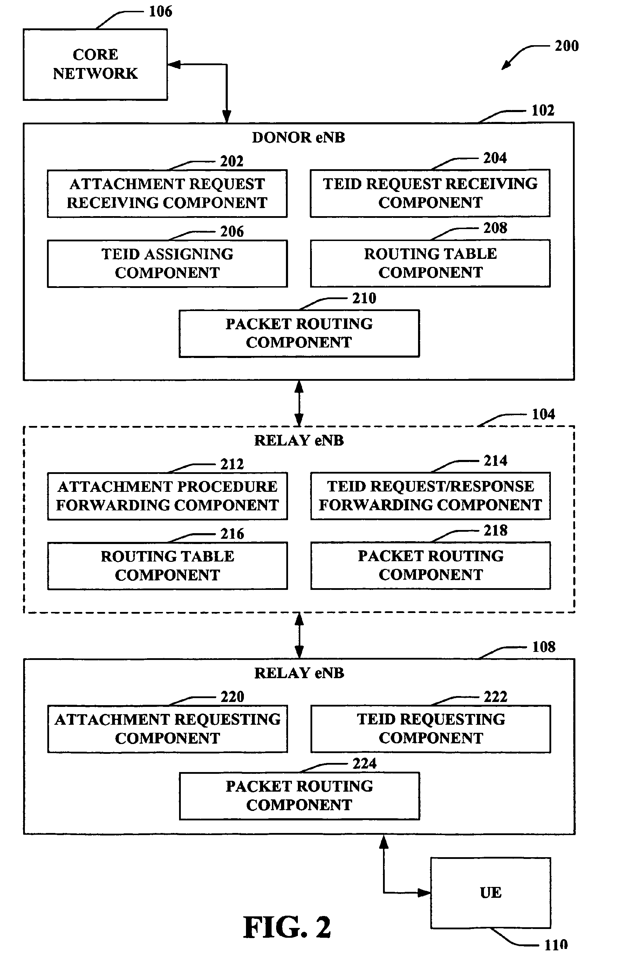

Turning now to **Fig. 2**, an example wireless communication system 200 that facilitates establishing a cell relay identifier during attachment for subsequent packet routing is illustrated. System 200 includes a donor eNB 102 that provides relay eNB 104 (and/or other relay eNBs) with access to core network 106. Additionally, as described, relay eNB 104 can provide relay eNB 108 with access to the core network 106 through the donor eNB 102. In an example, however, relay eNB 104 may not be present, and relay eNB 108 can communicate directly with donor eNB 102. In a similar example, there can be multiple relay eNBs 104 between the donor eNB 102 and relay eNB 108. In addition, it is to be appreciated that relay eNB 108 can comprise the components of relay eNB 104 and provide similar functionality, in one example. Moreover, donor eNB 102 can be a macrocell access point, femtocell access point, picocell access point, mobile base station, and/or the like. Relay eNBs 104 (and relay eNB 108) can similarly be mobile or stationary relay nodes that communicate with donor eNB 102 (and relay eNB 104) over a wireless or wired backhaul, as described.

Donor eNB 102 comprises an attachment request receiving component 202 that obtains a request for network attachment from one or more relay eNBs, a TEID request receiving component 204 that obtains a request for a TEID, or a portion thereof, from a relay eNB, a TEID assigning component 206 that establishes a TEID, or portion thereof, for a relay eNB, a routing table component 208 that maintains a routing table associating TEIDs or related portions to identifiers (*e.g*., C-RNTI) of related downstream relay eNBs, and a packet routing component 210 that routes packets received from the core network 106 based on a TEID, or a portion thereof, specified in the packets after attachment of a relay eNB.

Relay eNB 104 can include an attachment procedure forwarding component 212 that communicates attachment information between an upstream eNB and one or more relay eNBs, a TEID request/response forwarding component 214 that provides TEID requests to an upstream eNB and obtains established TEID responses from the upstream eNB for one or more downstream eNBs, a routing table component 216 that stores associations between established TEIDs, or portions thereof, and identifiers (*e.g*., C-RNTI) of related downstream relay eNBs, and a packet routing component 218 that forwards packets from an upstream eNB to the downstream relay eNB based at least in part on a TEID, or portion thereof, specified in the packets.

Relay eNB 108 comprises an attachment requesting component 220 that initiates an attachment procedure with one or more components of a wireless network, a TEID requesting component 222 that establishes a TEID, or portion thereof, with a donor eNB, and a packet routing component 224 that routes received packets from an upstream relay eNB to a UE or other downstream device once attached.

According to an example, attachment requesting component 220 can initiate attachment to a wireless network by transmitting an attachment request to donor eNB 102 *via* relay eNB 104, if present. Attachment procedure forwarding component 212 can receive the attachment request and forward the request to donor eNB 102. In either case, attachment request receiving component 202 can obtain the request and initiate an attachment procedure in core network 106. It is to be appreciated, for example, that relay eNB 108 can first receive communication resources from relay eNB 104, if present or donor eNB 102 if relay eNB 104 is not present (*e.g*., through a random access procedure) and establish radio communication therewith (*e.g*., by transmitting an RRC Connection Setup message). According to an example, the attachment procedure can be similar to that of a UE attaching to donor eNB 102. In this regard, core network 106 can authenticate relay eNB 108, and the relay eNB 108 can be attached through various bearer request messages, attach accept/complete messages, RRC Connection Reconfiguration messages and/or the like, described in further detail herein. It is to be appreciated that the attachment requesting component 220 can transmit and receive such messages from attachment request receiving component 202 through attachment procedure forwarding component 212 of relay eNB 104 and/or additional intermediary relay eNBs, where present.

In addition, core network 106, or one or more components thereof, can assign an IP address and/or eNB global identifier (EGI) to relay eNB 108 during the attachment procedure. As part of the attachment procedure, TEID requesting component 222 can request establishment of a TEID, or portion thereof, from donor eNB 102 by transmitting the request to relay eNB 104, if present or donor eNB 102 if relay eNB 104 is not present. TEID request/response forwarding component 214 can forward the TEID establishment request to donor eNB 102 where relay eNB 104 is present. In either case, TEID request receiving component 204 can obtain the request, and TEID assigning component 206 can establish the TEID. It is to be appreciated, for example, that the TEID establishment request can be related to establishing a TEID portion, such as a prefix. In another example, the TEID establishment request can relate to requesting use of a specific TEID or TEID portion. Moreover, in an example, the TEID establishment request can relate to requesting assignment of the entire TEID. In any case, TEID assigning component 206 can generate the TEID or related portion, confirm the TEID or portion if received in the establishment request, and/or provide a useable TEID or portion if the TEID or portion in the establishment request is not useable by relay eNB 108 (*e.g*., assigned to another eNB, does not conform to specifications, and/or the like).

Upon establishing the TEID or related portion for relay eNB 108, routing table component 208 can store an association between the TEID and a next downstream relay eNB in a communication path to relay eNB 108, which is relay eNB 104 in this example, if present or relay eNB 108 if relay eNB 104 is not present. In one example, the routing table can have a format similar to the following.

| **TEID Prefix** | **Next Downstream Relay eNB ID (C-RNTI)** |
|---|---|
| aa | XX |
| ... | ... |

If relay eNB 104 is present, TEID assigning component 206 can transmit the TEID or related portion to relay eNB 104. TEID request/response forwarding component 214 can receive the TEID or related portion, and routing table component 216 can store the TEID along with an association to the next downstream relay eNB in the communication path to relay eNB 108, which is relay eNB 108 in this example. Where additional intermediary relay eNBs are present, relay eNB 104 can forward the TEID or related portion to the intermediary relay eNBs, which can similarly store the TEID or portion in a routing table associating the TEID or portion to a downstream relay eNB. In this example, TEID request/response forwarding component 214 can provide the TEID to relay eNB 108. TEID requesting component 222 can receive the established TEID. At some point following TEID assignment, the attachment procedure can complete.

Subsequently, the TEID or related portion can be utilized to route packets to relay eNB 108. For example, donor eNB 102 can specify the TEID or related portion (along with a portion generated by relay eNB 108, in one example) in requests to core network 106. Core network 106 can transmit response packets to donor eNB 102 along with the TEID or related portion. Routing table component 208 can determine the next downstream relay eNB for the packet based on the TEID or portion, which can be relay eNB 104 in this example, where present. Packet routing component 210 can transmit the packet to relay eNB 104. Routing table component 216 can similarly determine a next downstream relay eNB based on the TEID or portion, which is relay eNB 108 in this example, and packet routing component 218 can forward the packet to relay eNB 108. It is to be appreciated that packet routing component 224 can subsequently route the packet to a UE 110 based on the TEID or portion or a disparate TEID portion specified in the request to donor eNB 102, for example. In one example, this can be based on a similar routing table that maps the TEID portion, or portion created by relay eNB 108 and included in the request to donor eNB 102, to an identifier of the UE 110 and/or a related bearer.

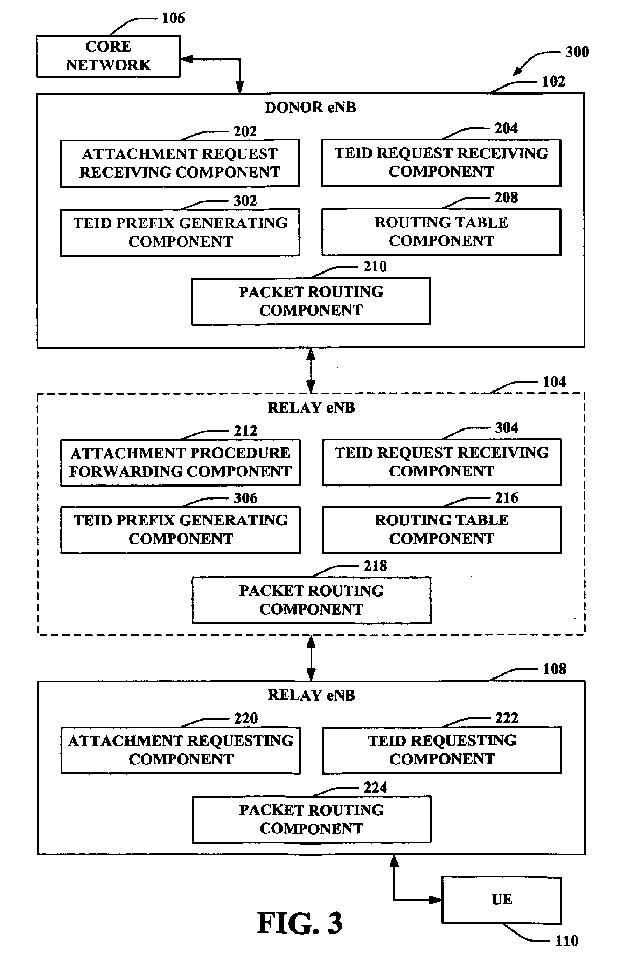

Turning now to **Fig. 3**, an example wireless communication system 300 that facilitates establishing a cell relay identifier during attachment for subsequent packet routing is illustrated. System 300 includes a donor eNB 102 that provides relay eNB 104 (and/or other relay eNBs) with access to core network 106. Additionally, as described, relay eNB 104 can provide relay eNB 108 with access to the core network 106 through the donor eNB 102. In an example, however, relay eNB 104 may not be present, and relay eNB 108 can communicate directly with donor eNB 102. In a similar example, there can be multiple relay eNBs 104 between the donor eNB 102 and relay eNB 108. In addition, it is to be appreciated that relay eNB 108 can comprise the components of relay eNB 104 and provide similar functionality, in one example. Moreover, donor eNB 102 can be a macrocell access point, femtocell access point, picocell access point, mobile base station, and/or the like. Relay eNBs 104 (and relay eNB 108) can similarly be mobile or stationary relay nodes that communicate with donor eNB 102 (and relay eNB 104) over a wireless or wired backhaul, as described.

Donor eNB 102 comprises an attachment request receiving component 202 that obtains a request for network attachment from one or more relay eNBs, a TEID request receiving component 204 that obtains a request for a TEID, or a portion thereof, from a relay eNB, a TEID prefix generating component 302 that creates a TEID prefix portion unique to donor eNB 102, a routing table component 208 that maintains a routing table associating TEIDs or related portions to identifiers (*e.g*., C-RNTI) of related downstream relay eNBs, and a packet routing component 210 that routes packets received from the core network 106 based on a TEID, or a portion thereof, specified in the packets after attachment of a relay eNB.

Relay eNB 104 can include an attachment procedure forwarding component 212 that communicates attachment information between an upstream eNB and one or more relay eNBs, a TEID request receiving component 304 that obtains a TEID request from a relay eNB and forwards the request to an upstream eNB, a TEID prefix generating component 306 that creates a portion of a TEID prefix for subsequent packet routing, a routing table component 216 that stores associations between established TEIDs, or portions thereof, and identifiers (*e.g*., C-RNTI) of related downstream relay eNBs, and a packet routing component 218 that forwards packets from an upstream eNB to the downstream relay eNB based at least in part on a TEID, or portion thereof, specified in the packets.

Relay eNB 108 comprises an attachment requesting component 220 that initiates an attachment procedure with one or more components of a wireless network, a TEID requesting component 222 that establishes a TEID, or portion thereof, with a donor eNB, and a packet routing component 224 that routes received packets from an upstream relay eNB to a UE or other downstream device once attached.

According to an example, attachment requesting component 220 can initiate attachment to a wireless network by transmitting an attachment request to donor eNB 102 *via* relay eNB 104, if present. Attachment procedure forwarding component 212 can receive the attachment request and forward the request to donor eNB 102. In either case, attachment request receiving component 202 can obtain the request and initiate an attachment procedure in core network 106. It is to be appreciated, for example, that relay eNB 108 can first receive communication resources from relay eNB 104, if present or donor eNB 102 if relay eNB 104 is not present (*e.g*., through a random access procedure) and establish radio communication therewith (*e.g*., by transmitting an RRC Connection Setup message). According to an example, the attachment procedure can be similar to that of a UE attaching to donor eNB 102. In this regard, core network 106 can authenticate relay eNB 108, and the relay eNB 108 can be attached through various bearer request messages, attach accept/complete messages, RRC Connection Reconfiguration messages and/or the like, described in further detail herein. It is to be appreciated that the attachment requesting component 220 can transmit and receive such messages from attachment request receiving component 202 through attachment procedure forwarding component 212 of relay eNB 104 and/or additional intermediary relay eNBs, where present.

In addition, core network 106, or one or more components thereof, can assign an IP address and/or eNB global identifier (EGI) to relay eNB 108 during the attachment procedure. As part of the attachment procedure, TEID requesting component 222 can request establishment of a TEID, or portion thereof, by transmitting the request to relay eNB 104, if present or donor eNB 102 if relay eNB 104 is not present. TEID request receiving component 304 can obtain the TEID request. TEID prefix generating component 306 can create a TEID prefix portion unique to relay eNB 104. In addition, routing table component 216 can store an association between the TEID prefix portion and an identifier of the next downstream relay eNB (relay eNB 108, in this example) for subsequent packet routing. TEID request receiving component 304 can forward the TEID establishment request to donor eNB 102. TEID request receiving component 204 can obtain the request, and TEID prefix generating component 302 can create a disparate portion of the TEID prefix unique to donor eNB 102. Similarly, routing table component 208 can store an association between the disparate TEID prefix portion and an identifier of the next downstream relay eNB 104 (relay eNB 104 where present). In addition, for example, TEID prefix generating component 302 can forward the complete TEID to relay eNB 104. In this example, TEID request receiving component 304 can obtain the complete TEID and forward it to relay eNB 108, which can receive the TEID *via* TEID requesting component 222.

Subsequently, the TEID or related prefixes can be utilized to route packets to relay eNB 108. For example, donor eNB 102 can specify the TEID (which can have a portion generated by relay eNB 108, in one example) in requests to core network 106. Core network 106 can transmit response packets to donor eNB 102 along with the TEID or related portion. Routing table component 208 can determine the next downstream relay eNB for the packet based on the portion of the TEID prefix generated by TEID prefix generating component 302, which can be relay eNB 104 in this example where present. Packet routing component 210 can transmit the packet to relay eNB 104. Routing table component 216 can similarly determine a next downstream relay eNB based on the portion of the TEID prefix generated by TEID prefix generating component 306, which is relay eNB 108 in this example, and packet routing component 218 can forward the packet to relay eNB 108. It is to be appreciated that packet routing component 224 can subsequently route the packet to a UE 110 based on the TEID or portion or a disparate TEID portion specified in the request to donor eNB 102, for example. In one example, this can be based on a similar routing table that maps the TEID portion, or portion created by relay eNB 108 and included in the request to donor eNB 102, to an identifier of the UE 110 and/or a related bearer.

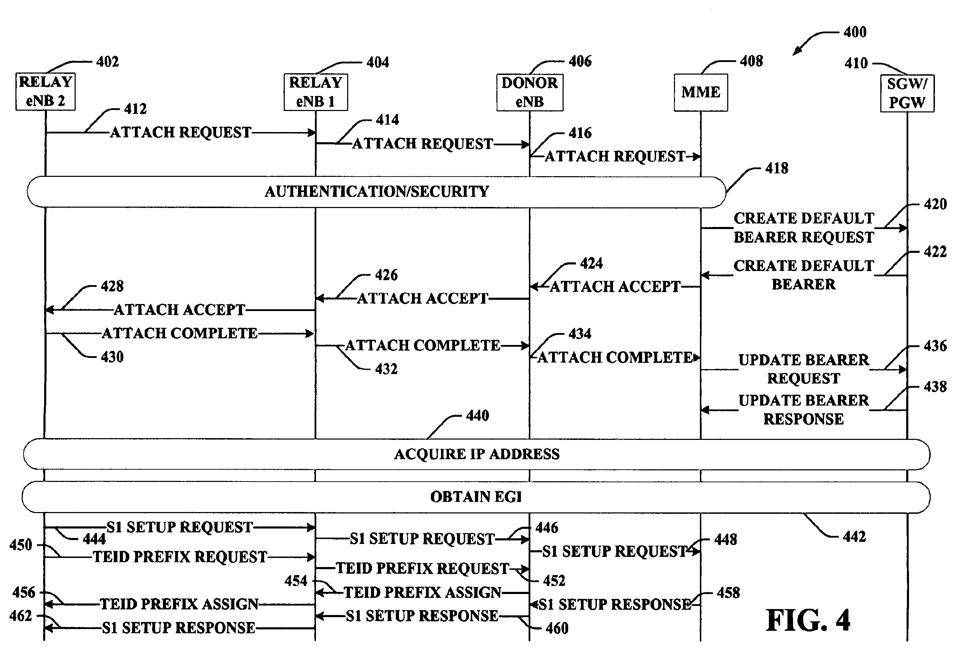

Referring to **Fig. 4**, an example wireless communication system 400 that facilitates requesting a TEID during attachment to a wireless network is illustrated. System 400 includes a relay eNB 2 402 that communicates with a relay 1 eNB 404 to receive access to a wireless network. Relay eNB 1 404 communicates with a donor eNB 406, as described, to receive access to network components. The wireless network components depicted include an MME 408 and SGW/PGW 410. As shown, relay eNB 2 402 can transmit an attach request 402 to relay 1 eNB 404. It is to be appreciated that relay eNB 2 402 can have initially received communication resources from relay eNB 1 404 (*e.g., via* random access procedure, RRC Connection Setup messages, etc.). Relay eNB 1 404 can forward the attach request 414 to donor eNB 406, which can forward the attach request 416 to MME 408. In response, MME 408 can initiate authentication/security procedures 418 with relay eNB 2 402 to ensure it is authorized to access the wireless network.

Once MME 408 determines that relay eNB 2 402 is authorized, MME 408 can initiate a create default bearer request 420 to SGW/PGW 410. SGW/PGW 410 can create the default bearer and transmit a create default bearer 422 to MME 408. MME 408 can accordingly transmit an attach accept 424 to donor eNB 406. Donor eNB 406 can forward the attach accept 426 to relay eNB 1 404, which can forward the attach accept 428 to relay eNB 2 402. Relay eNB 2 402 can acknowledge the attach accept 428 with an attach complete 430 to relay eNB 1 404. Relay eNB 1 404 can forward the attach complete 432 to donor eNB 406, which can forward the attach complete 434 to MME 408. Upon receiving the attach complete 434, MME 408 can transmit an update bearer request 436 to SGW/PGW 410, and SGW/PGW 410 can acknowledge the update bearer request 436 with an update bearer response 438 to MME 408.

Subsequently, relay eNB 2 402 can acquire an IP address 440 from SGW/PGW 410. In this regard, relay eNB 2 402 can perform an attachment procedure to the wireless network similarly to a UE. In addition, however, relay eNB 2 402 can obtain an EGI 442 from SGW/PGW 410 (*e.g*., through SGW/PGW 410 from an operation, administration, and maintenance (OAM) entity). After receiving the EGI, relay eNB 2 402 can transmit an S1 setup request 444 to relay eNB 1 404 to establish an S1 interface with relay eNB 1 404. In one example, relay eNB 2 402 can include the EGI in the S1 setup request for subsequent routing of S1-application protocol (S1-AP) messages. Relay eNB 1 404 can forward the S1 setup request 446 to donor eNB 406, which can forward the S1 setup request 448 to MME 408. In addition, relay eNB 2 402, as described, can transmit a TEID prefix request 450 to relay eNB 1 404, which can forward the TEID prefix request 452 to donor eNB 406.

Donor eNB 406 can generate a TEID prefix, as described previously. In another example, relay eNB 404 can additionally generate a portion of the TEID prefix, as described. In addition, as described, donor eNB 406 can store an association between the TEID prefix and an identifier of relay eNB 1 404 (*e.g*., the next downstream relay eNB). Donor eNB 406 can transmit a TEID prefix assignment 454 to relay eNB 1 404 comprising the TEID prefix. Relay eNB 1 404 can similarly store an association between the TEID prefix and relay eNB 2 402 (*e.g.,* the next downstream relay eNB). In another example, where relay eNB 1 404 also assigns a portion of the TEID prefix, it can store an association between the portion of the TEID it assigned and the identifier of the relay eNB 2 402. In either case, relay eNB 1 404 can transmit the TEID prefix assignment 456 (*e.g.,* generated by donor eNB 406 or and/or portion generated by relay eNB 1 404) to relay eNB 402. Upon establishing an S1 interface, MME 408 can transmit an S 1 setup response 458 to donor eNB 406. Donor eNB 406 can forward the S1 setup response 460 to relay eNB 1 404, which can forward S1 setup response 462 to relay eNB 402. Thus, relay eNB 402 can request TEID assignment during attachment to the wireless network.

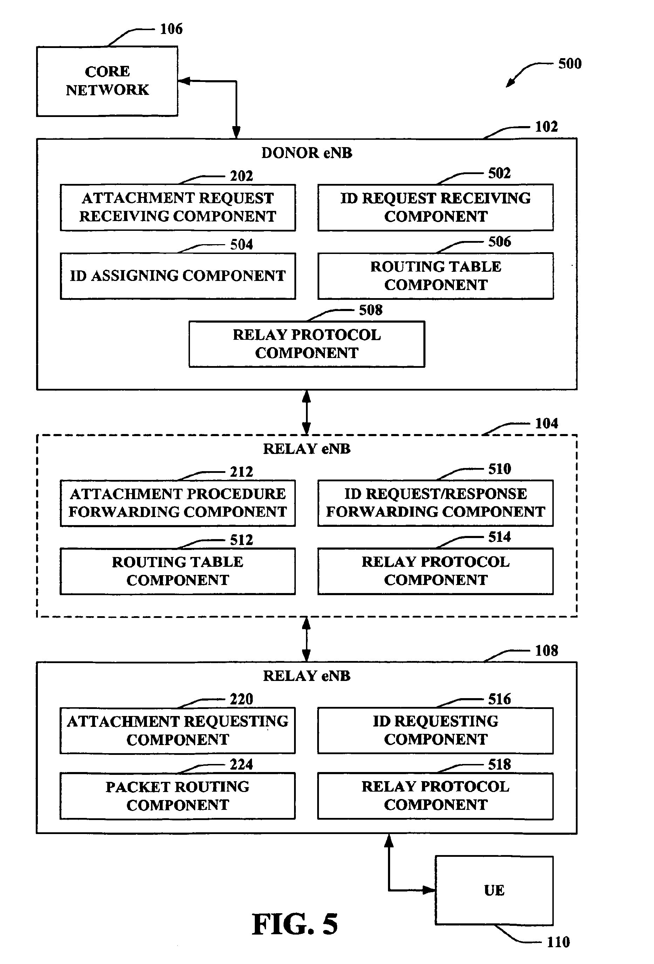

Turning now to **Fig. 5**, an example wireless communication system 500 that facilitates requesting a relay identifier during attachment to a wireless network is illustrated. System 500 includes a donor eNB 102 that provides relay eNB 104 (and/or other relay eNBs) with access to core network 106. Additionally, as described, relay eNB 104 can provide relay eNB 108 with access to the core network 106 through the donor eNB 102. In an example, however, relay eNB 104 may not be present, and relay eNB 108 can communicate directly with donor eNB 102. In a similar example, there can be multiple relay eNBs 104 between the donor eNB 102 and relay eNB 108. In addition, it is to be appreciated that relay eNB 108 can comprise the components of relay eNB 104 and provide similar functionality, in one example. Moreover, donor eNB 102 can be a macrocell access point, femtocell access point, picocell access point, mobile base station, and/or the like. Relay eNBs 104 (and relay eNB 108) can similarly be mobile or stationary relay nodes that communicate with donor eNB 102 (and relay eNB 104) over a wireless or wired backhaul, as described.

Donor eNB 102 comprises an attachment request receiving component 202 that obtains a request for network attachment from one or more relay eNBs, an ID request receiving component 502 that obtains a request for a relay identifier related to a relay protocol from a relay eNB, an ID assigning component 504 that allocates a relay identifier to a relay eNB, a routing table component 506 that maintains a routing table associating relay identifiers to identifiers (*e.g*., C-RNTI) of related downstream relay eNBs, and a relay protocol component 508 that establishes a relay protocol layer with downstream relay eNBs to transmit data received by core network 106 at a disparate transport layer.

Relay eNB 104 can include an attachment procedure forwarding component 212 that communicates attachment information between an upstream eNB and one or more relay eNBs, an ID request/response forwarding component 510 that provides relay identifier requests to an upstream eNB and obtains established ID responses from the upstream eNB for one or more downstream eNBs, a routing table component 512 that stores associations between established relay identifiers and identifiers (*e.g*., C-RNTI) of related downstream relay eNBs, and a relay protocol component 514 that communicates upper layer packets with an upstream eNB and downstream eNB over a relay protocol layer.

Relay eNB 108 comprises an attachment requesting component 220 that initiates an attachment procedure with one or more components of a wireless network, an ID requesting component 516 that requests and receives a relay ID from a donor eNB (*e.g*., through intermediary relay eNBs), a packet routing component 224 that routes received packets from an upstream relay eNB to a UE or other downstream device once attached, and a relay protocol component 518 that communicates with upstream eNBs over a relay protocol layer.

According to an example, attachment requesting component 220 can initiate attachment to a wireless network by transmitting an attachment request to donor eNB 102 *via* relay eNB 104, if present. Attachment procedure forwarding component 212 can receive the attachment request and forward the request to donor eNB 102. In either case, attachment request receiving component 202 can obtain the request and initiate an attachment procedure in core network 106. It is to be appreciated, for example, that relay eNB 108 can first receive communication resources from relay eNB 104, if present or donor eNB 102 if relay eNB 104 is not present (*e.g*., through a random access procedure) and establish radio communication therewith (*e.g*., by transmitting an RRC Connection Setup message). According to an example, the attachment procedure can be similar to that of a UE attaching to donor eNB 102. In this regard, core network 106 can authenticate relay eNB 108, and the relay eNB 108 can be attached through various bearer request messages, attach accept/complete messages, RRC Connection Reconfiguration messages and/or the like. It is to be appreciated that the attachment requesting component 220 can transmit and receive such messages from attachment request receiving component 202 through attachment procedure forwarding component 212 of relay eNB 104 and/or additional intermediary relay eNBs, where present.

During attachment, ID requesting component 516 can transmit a request for a relay identifier to donor eNB 102 (*via* relay eNB 104 if present) to support subsequent packet routing over a relay protocol. If relay eNB 104 is present, ID request/response forwarding component 510 can receive the request for the relay identifier and forward it to donor eNB 102. In either case, ID request receiving component 502 can obtain the request for the relay identifier. ID assigning component 504 can generate or otherwise select a relay identifier for the relay eNB 108. The relay identifier can be selected randomly, according to one or more parameters related to the relay eNB 108, and/or using substantially any assignment logic. Once a relay identifier is selected, routing table component 506 can store the relay identifier along with an identifier of the next downstream relay eNB in a communication path to relay eNB 108, which is relay eNB 104 in this example if present. ID assigning component 504 can transmit the relay identifier to relay eNB 104.

ID request/response forwarding component 510 can obtain the relay identifier. Routing table component 512 can similarly store the relay identifier along with an identifier of the next downstream relay eNB, which is relay eNB 108 in this example. ID request/response forwarding component 510 can subsequently provide the relay identifier to relay eNB 108. It is to be appreciated that where additional intermediary relay eNBs exist between relay eNB 108 and donor eNB 102, the additional intermediary relay eNBs can similarly receive the relay identifier, store the relay identifier with an identifier of a next downstream relay eNB, and transmit the relay identifier to the next downstream relay eNB. In any case, ID requesting component 516 can receive the relay identifier. At some point subsequent to receiving the relay identifier, the attachment procedure can complete.

Subsequently, the relay identifier can be utilized to route packets to relay eNB 108. For example, donor eNB 102 can specify the relay identifier in requests to core network 106. Core network 106 can transmit response packets to donor eNB 102 along with the relay identifier. Routing table component 506 can determine the next downstream relay eNB in the communication path to relay eNB 108 for the packet based on the relay identifier, which can be relay eNB 104 in this example where present. Relay protocol component 508 can generate a relay protocol layer packet including the upper layer protocol in the received packet as the payload in the relay protocol packet. In addition, relay protocol component 508 can populate the relay protocol packet header with the relay identifier and transmit the relay protocol packet to the next downstream relay eNB. In one example, the protocol header can have a format similar to the following.

| Protocol (3 bits) | I (1 bit) | Reserved (4 bits) | Relay ID (16 bits) |
|---|---|---|---|
| Destination IP Address (optional) | | | |

Where relay eNB 104 is present, relay protocol component 514 can receive the relay protocol packet. Routing table component 512 can obtain the relay identifier from the header of the relay protocol packet and determine a next downstream relay eNB to receive the packet, which is relay eNB 108, in this example. Relay protocol component 514 can forward the relay protocol packet to relay eNB 108. Relay protocol component 514, in either case, can receive the relay protocol packet and determine that the packet relates to relay eNB 108 based on the relay identifier in the header. It is to be appreciated that packet routing component 224 can subsequently route the packet to a UE 110 based on the relay identifier, for example. In one example, this can be based on a similar routing table that maps the relay identifier to an identifier of the UE 110 or related bearer. In this regard, for example, packet routing component 224 can route the upper layer protocol payload of the packet to UE 110 over a disparate transport layer. Similarly, for packets received from UE 110, relay protocol component 518 can generate a relay protocol layer packet, populate the header with the corresponding relay identifier, and transmit the relay protocol packet to donor eNB 102 *via* relay eNB 104, for example. Thus, donor eNB 102 can specify the relay identifier in communicating with the core network 106, as described.

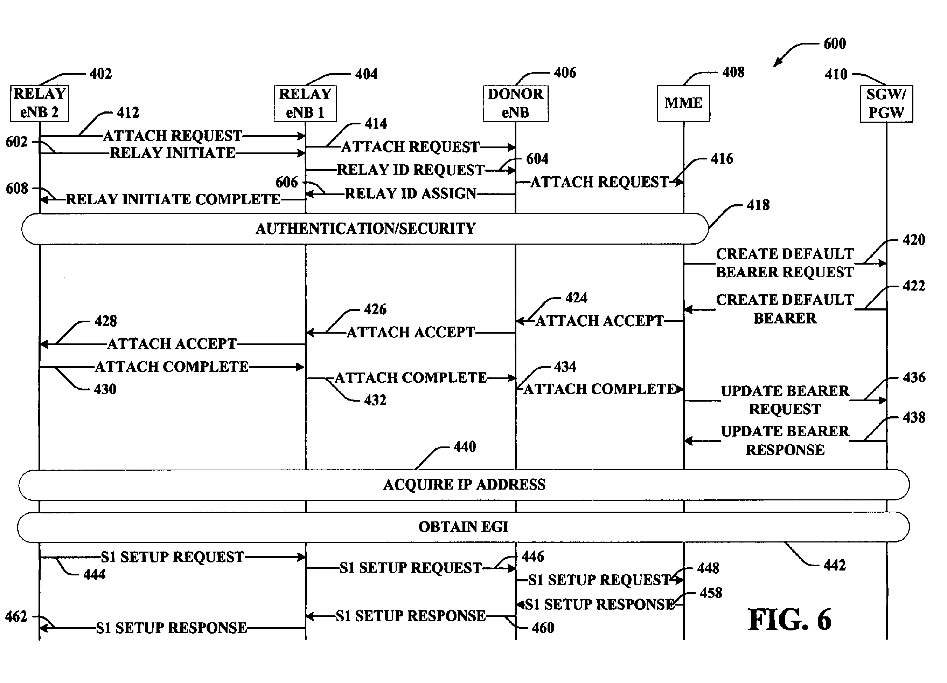

Referring to **Fig. 6**, an example wireless communication system 600 that facilitates requesting a relay identifier during attachment to a wireless network is illustrated. System 600 includes a relay eNB 2 402 that communicates with a relay 1 eNB 404 to receive access to a wireless network. Relay eNB 1 404 communicates with a donor eNB 406, as described, to receive access to network components. The wireless network components depicted include an MME 408 and SGW/PGW 410. As shown, relay eNB 2 402 can transmit an attach request 402 to relay 1 eNB 404. It is to be appreciated that relay eNB 2 402 can have initially received communication resources from relay eNB 1 404 (*e.g., via* random access procedure, RRC Connection Setup messages, *etc*.). Relay eNB 1 404 can forward the attach request 414 to donor eNB 406.

Relay eNB 2 402 can also transmit a relay initiate 602 to relay eNB 1 404 to establish a relay identifier. Relay eNB 1 404 can, in turn, transmit a relay ID request 604 to donor eNB 406. Donor eNB 406 can forward the attach request 416 to MME 408 and create or otherwise select a relay identifier for relay eNB 2 402. As described, donor eNB 406 can additionally store the relay identifier with an identifier of relay eNB 1 404 for subsequent packet routing. Donor eNB 406 can transmit a relay ID assign 606 to relay eNB 1 404. Relay eNB 1 404 can similarly store the relay identifier along with an identifier for relay eNB 2 402 to facilitate subsequent packet routing, as described. Relay eNB 1 404 can further transmit a relay initiate complete 608 to relay eNB 2 402, which can also comprise the relay identifier, in one example, such that relay eNB 2 402 can utilize the identifier in subsequent uplink transmissions using the relay protocol. Subsequently, MME 408 can initiate authentication/security procedures 418 with relay eNB 2 402 to ensure it is authorized to access the wireless network.

Once MME 408 determines that relay eNB 2 402 is authorized, MME 408 can initiate a create default bearer request 420 to SGW/PGW 410. SGW/PGW 410 can create the default bearer and transmit a create default bearer 422 to MME 408. MME 408 can accordingly transmit an attach accept 424 to donor eNB 406. Donor eNB 406 can forward the attach accept 426 to relay eNB 1 404, which can forward the attach accept 428 to relay eNB 2 402. Relay eNB 2 402 can acknowledge the attach accept 428 with an attach complete 430 to relay eNB 1 404. Relay eNB 1 404 can forward the attach complete 432 to donor eNB 406, which can forward the attach complete 434 to MME 408. Upon receiving the attach complete 434, MME 408 can transmit an update bearer request 436 to SGW/PGW 410, and SGW/PGW 410 can acknowledge the update bearer request 436 with an update bearer response 438 to MME 408.

Subsequently, relay eNB 2 402 can acquire an IP address 440 from SGW/PGW 410. In this regard, relay eNB 2 402 can perform an attachment procedure similar to a UE. In addition, however, relay eNB 2 402 can obtain an EGI 442 from SGW/PGW 410 (*e.g*., through SGW/PGW 410 from an operation, administration, and maintenance (OAM) entity). After receiving the EGI, relay eNB 2 402 can transmit an S1 setup request 444 to relay eNB 1 404 to establish an S1 interface with relay eNB 1 404. In one example, relay eNB 2 402 can include the EGI in the S1 setup request for subsequent routing of S1-application protocol (S1-AP) messages. Relay eNB 1 404 can forward the S1 setup request 446 to donor eNB 406, which can forward the S 1 setup request 448 to MME 408. Upon establishing an S 1 interface, MME 408 can transmit an S1 setup response 458 to donor eNB 406. Donor eNB 406 can forward the S1 setup response 460 to relay eNB 1 404, which can forward S1 setup response 462 to relay eNB 402. Thus, relay eNB 402 can request relay identifier assignment during attachment to the wireless network

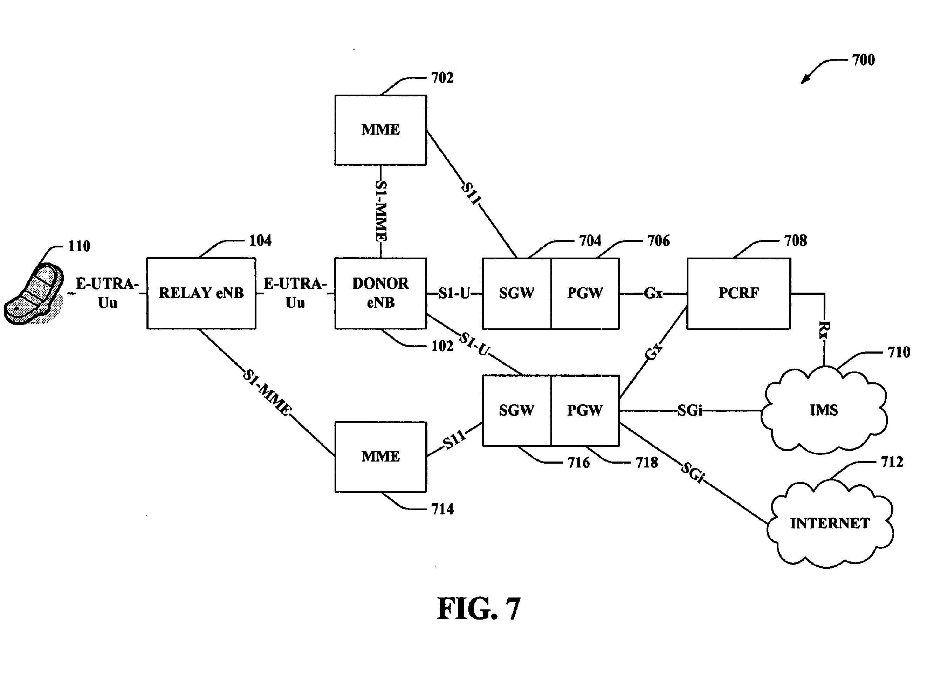

Now turning to **Fig. 7**, an example wireless communication network 700 that provides cell relay functionality is depicted. Network 700 includes a UE 110 that communicates with a relay eNB 104, as described, to receive access to a wireless network. Relay eNB 104 can communicate with a donor eNB 102 using a relay protocol to provide access to a wireless network, and as described, donor eNB 102 can communicate with an MME 702 and/or SGW 704 that relate to the relay eNB 104. SGW 704 can connect to or be coupled with a PGW 706, which provides network access to SGW 704 and/or additional SGWs. PGW 706 can communicate with a PCRF 708 to authenticate/authorize UE 110 to use the network, which can utilize an IMS 710 to provide addressing to the UE 110 and/or relay eNB 104.

According to an example, MME 702 and/or SGW 704 and PGW 706 can be related to donor eNB 102 serving substantially all relay eNBs in the cluster. Donor eNB 102 can also communicate with an SGW 716 and PGW 718 that relate to the UE 110, such that the PGW 718 can assign UE 110 a network address to facilitate tunneling communications thereto through the relay eNB 104, donor eNB 102, and SGW 716. Moreover, for example, SGW 716 can communicate with an MME 714 to facilitate control plane communications to and from the UE 110. It is to be appreciated that MME 702 and MME 714 can be the same MME, in one example. PGW 718 can similarly communicate with a PCRF 708 to authenticate/authorize UE 110, which can communicate with an IMS 710. In addition, PGW 718 can communicate directly with the IMS 710 and/or internet 712.

In an example, UE 110 can communicate with the relay eNB 104 over an E-UTRA-Uu interface, as described, and the relay eNB 104 can communicate with the donor eNB 102 using an E-UTRA-Uu interface or other interface using the relay protocol, as described herein. Donor eNB 102 communicates with the MME 702 using an S1-MME interface and the SGW 704 and PGW 706 over an S1-U interface, as depicted. In one example, as described, communications received from relay eNB 104 for MME 702 or SGW 704/PGW 706 can be over a relay protocol and can have an IP address of MME 702 or SGW 704/PGW 706 in the relay protocol header. Donor eNB 102 can appropriately route the packet according to the IP address and/or payload type of the relay protocol. In another example, packets from relay eNB 104 can comprised a previously assigned TEID or portion thereof. In addition, the transport layers used over the S1-MME and S1-U interfaces are terminated at the donor eNB 102, as described. In this regard, upon receiving communications for the relay eNB 104 from the MME 702 or SGW 704, donor eNB 102 can, for example, decouple the application layer from the transport layer by defining a new relay protocol packet, or other protocol layer packet, and transmitting the application layer communication to the relay eNB 104 in the new protocol packet (over the E-UTRA-Uu interface, in one example). Donor eNB 102 can transmit the packet to relay eNB 104 (and/or one or more disparate relay eNBs as described) based on a TEID in the packet or relay identifier in the header.

Upon transmitting control plane communications from the relay eNB 104 to the MME 702, donor eNB 102 can indicate an identifier of the relay eNB 104 (*e.g*., in an S1-AP message), and MME 702 can transmit the identifier in responding communications to the donor eNB 102. When transmitting data plane communications from relay eNB 104 to SGW 704, donor eNB 102 can insert an identifier for the relay eNB 104 (or UE 110 or one or more related bearers) in the TEID of a GTP-U header to identify the relay eNB 104 (or UE 110 or one or more related bearers). This can be an identifier generated for relay eNB 104 by donor eNB 102 such that donor eNB 102 can determine the relay eNB 104, or one or more downstream relay eNBs is to receive the translated packet, as described above. For example, this can be based at least in part on locating at least a portion of the identifier in a routing table at donor eNB 102. In addition, headers can be compressed, in one example, as described. As shown, MME 702 can communicate with SGW 704, and MME 714 to SGW 716, using an S11 interface. PGWs 706 and 718 can communicate with PCRF 708 over a Gx interface. Furthermore, PCRF 708 can communicate with IMS 710 using an Rx interface, and PGW 718 can communicate with IMS 710 and/or the internet 712 using an SGi interface.

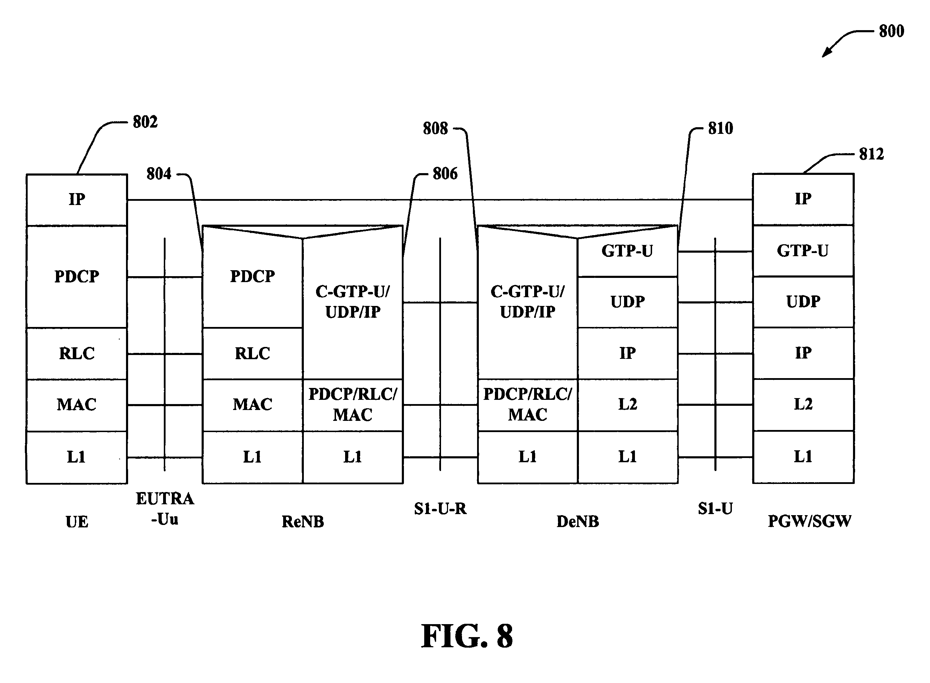

Referring to Fig. 8, example protocol stacks 800 are illustrated that facilitate communicating in a wireless network to provide cell relay functionality for data (*e.g*., user) plane communications using a TEID for packet routing. A UE protocol stack 802 is shown comprising an L1 layer, MAC layer, an RLC layer, a PDCP layer, and an IP layer. A relay eNB (ReNB) access link protocol stack 804 is depicted having an L1 layer, MAC layer, RLC layer, and PDCP layer, as well as an ReNB backhaul link protocol stack 806 having an L1 layer, PDCP/RLC/MAC layer, and a C-GTP-U/UDP/IP layer, which can be a compressed layer in one example, to facilitate routing packets on the backhaul (*e.g*., by populating the TEID with the ReNB address, as described previously). A donor eNB (DeNB) access link protocol stack 808 is also shown having an L1 layer, PDCP/RLC/MAC layer, and a C-GTP/UDP/IP layer, as well as a DeNB backhaul link protocol stack 810 having an L1 layer, L2 layer, an IP layer, a UDP layer, and a GTP-U layer to maintain communications with a PGW/SGW using an address assigned by the PGW/SGW. PGW/SGW protocol stack 812 has an L1 layer, L2, layer, IP layer related to an address assigned to the DeNB, UDP layer, GTP-U layer, and another IP layer related to an address assigned to the UE.

According to an example, a UE can communicate with an ReNB to receive access to a PGW/SGW. In this regard, UE can communicate over L1, MAC, RLC, and PDCP layers with the ReNB over using a EUTRA-Uu interface, as shown between protocol stacks 802 and 804. The UE can tunnel IP layer communications through the ReNB and other entities to the PGW/SGW, which assigns an IP address to the UE, as shown between protocol stacks 802 and 812. To facilitate such tunneling, the ReNB communicates with a DeNB over L1, PDCP/RLC/MAC, and C-GTP-U/UDP/IP layers using an S1-U-R interface, as shown between protocol stacks 806 and 808. As described, the S1-U-R interface can be a newly defined interface that utilizes a disparate transport layer than communications between DeNB and PGW/SGW. In this regard, communications between ReNB and DeNB additionally use a compressed version of the GTP-U, UDP/IP headers. Moreover, this compressed header can indicate TEID, as described herein, of the ReNB in the GTP-U header to facilitate return communications, as described, herein. DeNB can decouple the C-GTP-U/UDP/IP header from the transport layer and communicate with the PGW over separate GTP-U, UDP, and IP layers on top of L1 and L2 physical layers over an S1-U interface, as shown between protocol stacks 810 and 812. The same can be true for downlink communications, as described, where DeNB decouples the GTP, UDP, and IP layers from the transport layers, compresses them into a C-GTP-U/UDP/IP header, and transmits over the PDCP/RLC/MAC and L1 layers to the ReNB. DeNB, as described, can use a TEID in the GTP-U header to route the packet to the ReNB. In one example, this mitigates the need for UDP/IP routing on the backhaul, *etc*.

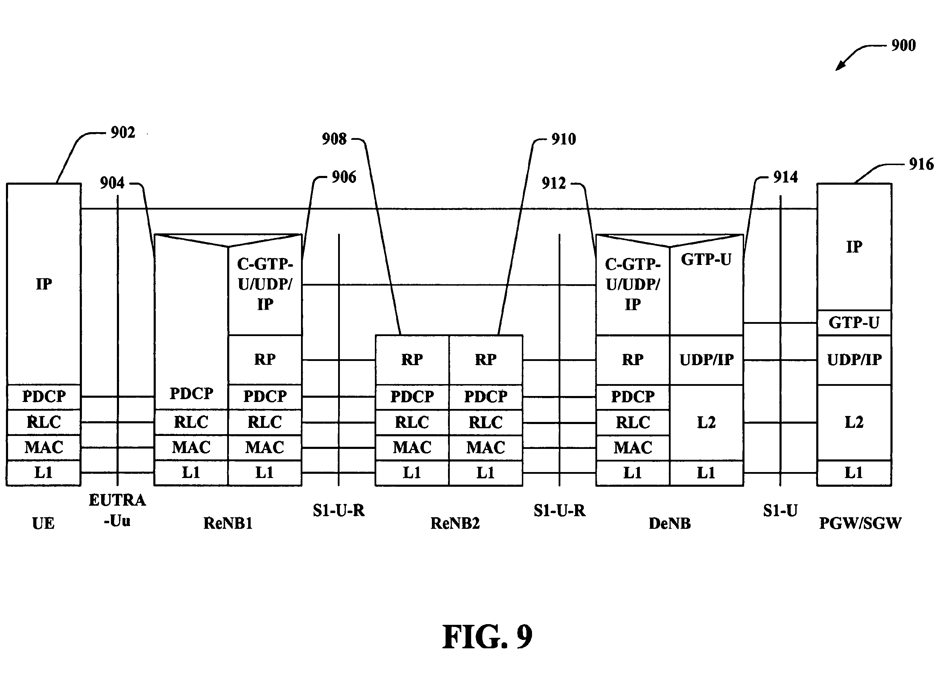

Referring to **Fig. 9**, example protocol stacks 900 are illustrated that facilitate communicating in a wireless network to provide cell relay functionality for data (e.g., user) plane communications using a relay protocol. A UE protocol stack 902 is shown comprising an L1 layer, MAC layer, an RLC layer, a PDCP layer, and an IP layer. A relay eNB1 (ReNB) access link protocol stack 904 is depicted having an L1 layer, MAC layer, RLC layer, and PDCP layer, as well as an ReNB 1 backhaul link protocol stack 906 having an L1 layer, MAC layer, RLC layer, PDCP layer, relay protocol (RP) layer, and a C-GTP-U/UDP/IP layer, which can be a compressed layer in one example, to facilitate communicating packets on the backhaul. An intermediary ReNB2 access link protocol stack 908 is shown having an L1 layer, MAC layer, RLC layer, PDCP layer, and RP layer, as well as a backhaul link protocol stack 910 for the intermediary ReNB2 having the same layers.

A DeNB access link protocol stack 908 is also shown having an L1 layer, MAC layer, RLC layer, PDCP layer, RP layer, and a C-GTP/UDP/IP layer, as well as a DeNB backhaul link protocol stack 910 having an L1 layer, L2 layer, a UDP/IP layer, and a GTP-U layer to maintain communications with a PGW/SGW using an address assigned by the PGW/SGW. PGW/SGW protocol stack 912 has an L1 layer, L2, layer, UDP/IP layer related to an address assigned to the DeNB, GTP-U layer, and another IP layer related to an address assigned to the UE.

According to an example, a UE can communicate with an ReNB1 to receive access to a PGW/SGW. In this regard, UE can communicate over L1, MAC, RLC, and PDCP layers with the ReNB1 over using a EUTRA-Uu interface, as shown between protocol stacks 902 and 904. The UE can tunnel IP layer communications through the ReNB1 and other entities to the PGW/SGW, which assigns an IP address to the UE, as shown between protocol stacks 902 and 916. To facilitate such tunneling, ReNB 1 communicates with ReNB2 over an RP, as described herein, on top of L1, MAC, RLC, PDCP layers using an S1-U-R interface (or other new interface for communicating using a relay protocol), as shown between protocol stacks 906 and 908. In addition, the RP can carry the upper layer C-GTP-U/UDP/IP layer in the RP payload, as described previously, to the disparate RP, as shown between protocol stacks 906 and 908. Moreover, as described, the RP header can include an identifier of ReNB1, an IP address of the PGW/SGW, a protocol type indicating C-GTP-U/UDP/IP data in the RP payload, and/or the like.

ReNB2, and any other intermediary ReNBs, can forward the RP communication to the DeNB, as shown between protocol stack s 910 and 912. In this example, DeNB can receive the RP packet, over the lower layers, and can extract the C-GTP-U/UDP/IP packet from the payload and communicate with the PGW over separate GTP-U, UDP, and IP layers on top of L1 and L2 physical layers over an S1-U interface, as shown between protocol stacks 914 and 916. In one example, the DeNB can include the relay identifier from the RP packet header in the GTP-U communications. Thus, as described, downlink communications from PGW/SGW protocol stack 912 can include the relay identifier. In this regard, upon receiving downlink communications from PGW/SGW protocol stack 916 over DeNB backhaul link protocol stack 914, DeNB access link protocol stack 912 can generate an RP packet with a header comprising the relay identifier received over PGW/SGW protocol stack 916 and a compressed GTP-U/UDP/IP packet as the payload. DeNB access link protocol stack 912 can transmit the RP packet over ReNB2 backhaul link protocol stack 912, which can forward the RP packet over ReNB2 access link protocol stack 908 to ReNB backhaul link protocol stack 906 based on the relay identifier in the RP header, as described. ReNB 1 backhaul link protocol stack 906 can obtain the C-GTP-U/UDP/IP payload of the RP packet and forward to UE protocol stack 902, where the RP packet payload is of certain types, as described.

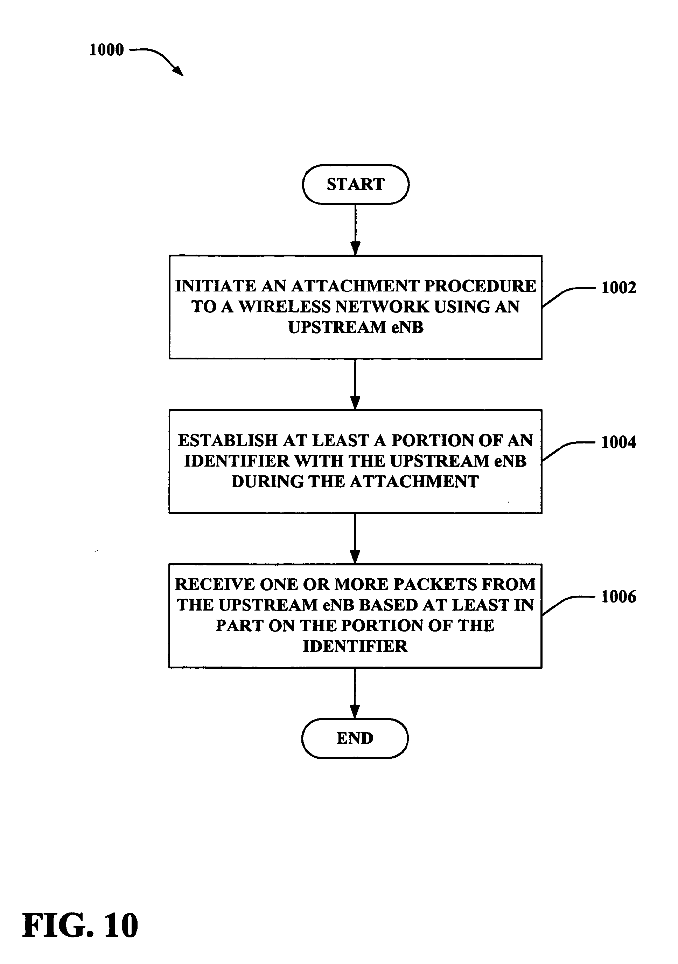

Referring to **Figs. 10-11**, methodologies relating to receiving a TEID or relay identifier during an attachment procedure are illustrated. While, for purposes of simplicity of explanation, the methodologies are shown and described as a series of acts, it is to be understood and appreciated that the methodologies are not limited by the order of acts, as some acts may, in accordance with one or more aspects, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with one or more aspects.

Turning to **Fig. 10**, an example methodology 1000 that facilitates establishing an identifier for subsequent relay packet routing during a network attachment procedure is illustrated. At 1002, an attachment procedure to a wireless network can be initiated using an upstream eNB. As described, network attachment can be requested through a donor eNB, which can include requesting through intermediary relay eNBs, in one example. In addition, the attachment procedure can be similar to a UE attachment procedure. At 1004, at least a portion of an identifier can be established with the upstream eNB during the attachment. The identifier, as described previously, can be utilized to facilitate packet routing. For example, the identifier can be a TEID, or portion thereof, a relay identifier, and/or the like. Additionally, the identifier, or portion thereof, can be established according to requesting an identifier assignment from the upstream eNB, requesting to use a specific identifier from an upstream eNB, and/or the like, as described. At 1006, one or more packets can be received from the upstream eNB based at least in part on the portion of the identifier. Thus, as described, the identifier established during attachment can be utilized to route packets from the upstream eNB.

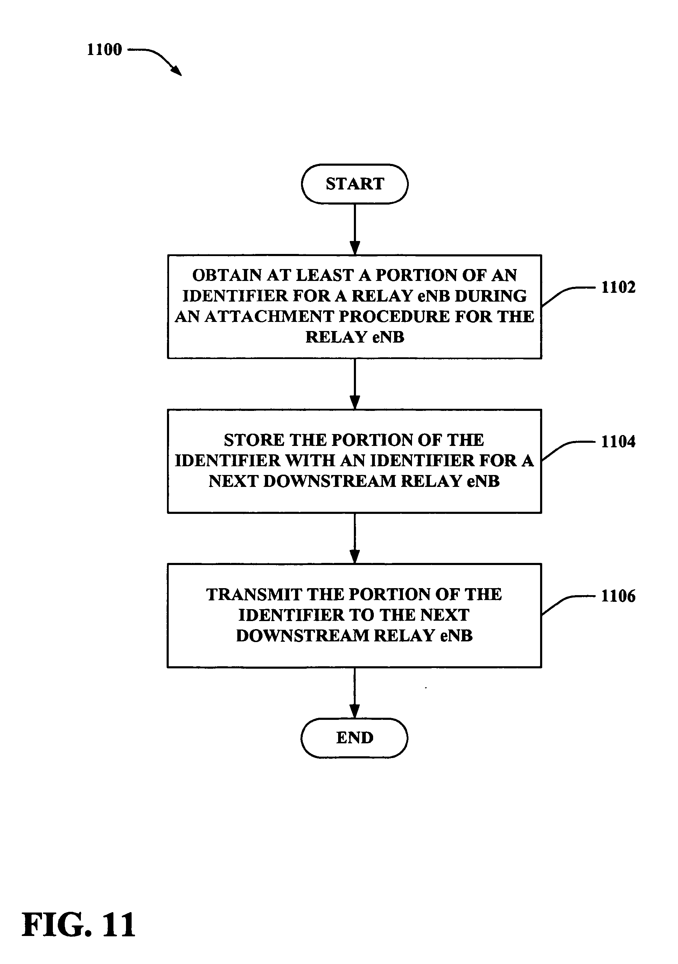

Referring to **Fig. 11**, an example methodology 1100 is shown that facilitates providing a downstream eNB with an identifier for subsequent packet routing during a network attachment procedure. At 1102, at least a portion of an identifier can be obtained for a relay eNB during an attachment procedure for the relay eNB. As described, the identifier can be generated or received from an upstream eNB, for example. Where the identifier is generated, it can be generated based on a request received from the relay eNB during the network attachment procedure, as described. At 1104, the portion of the identifier can be stored with an identifier for a next downstream relay eNB. This can support subsequent routing to the next downstream relay eNB in the communication path to the relay eNB upon receiving packets with the identifier or portion thereof. At 1106, the portion of the identifier can be transmitted to the next downstream relay eNB. As described, the next downstream relay eNB, in one example, can similarly store and forward the identifier.

It will be appreciated that, in accordance with one or more aspects described herein, inferences can be made regarding generating an identifier or a portion thereof for a relay eNB, determining one or more network nodes related to an identifier, and/or other aspects described herein. As used herein, the term to "infer" or "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

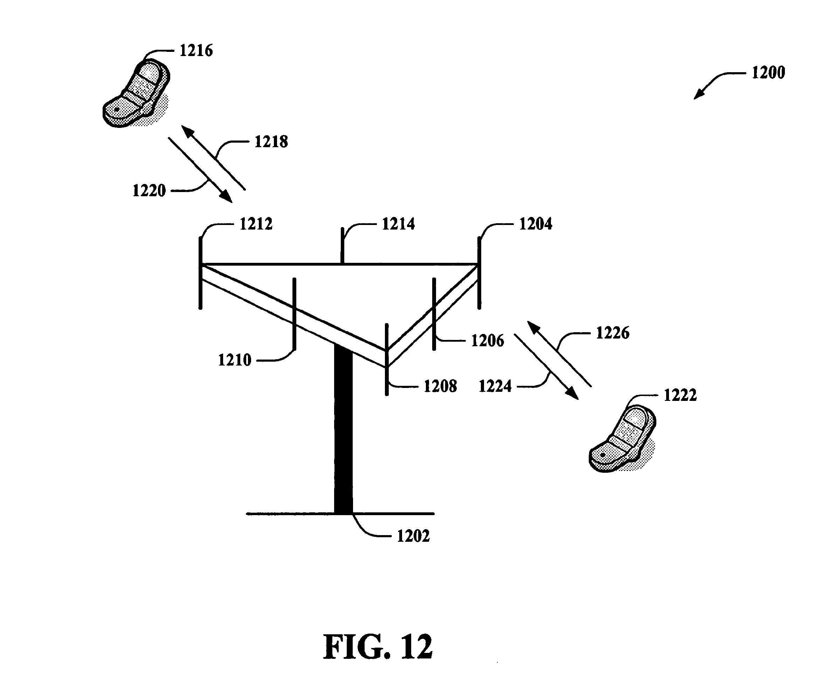

Referring now to **Fig. 12**, a wireless communication system 1200 is illustrated in accordance with various embodiments presented herein. System 1200 comprises a base station 1202 that can include multiple antenna groups. For example, one antenna group can include antennas 1204 and 1206, another group can comprise antennas 1208 and 1210, and an additional group can include antennas 1212 and 1214. Two antennas are illustrated for each antenna group; however, more or fewer antennas can be utilized for each group. Base station 1202 can additionally include a transmitter chain and a receiver chain, each of which can in turn comprise a plurality of components associated with signal transmission and reception (*e.g*., processors, modulators, multiplexers, demodulators, demultiplexers, antennas, *etc*.), as will be appreciated by one skilled in the art.

Base station 1202 can communicate with one or more mobile devices such as mobile device 1216 and mobile device 1222; however, it is to be appreciated that base station 1202 can communicate with substantially any number of mobile devices similar to mobile devices 1216 and 1222. Mobile devices 1216 and 1222 can be, for example, cellular phones, smart phones, laptops, handheld communication devices, handheld computing devices, satellite radios, global positioning systems, PDAs, and/or any other suitable device for communicating over wireless communication system 1200. As depicted, mobile device 1216 is in communication with antennas 1212 and 1214, where antennas 1212 and 1214 transmit information to mobile device 1216 over a forward link 1218 and receive information from mobile device 1216 over a reverse link 1220. Moreover, mobile device 1222 is in communication with antennas 1204 and 1206, where antennas 1204 and 1206 transmit information to mobile device 1222 over a forward link 1224 and receive information from mobile device 1222 over a reverse link 1226. In a frequency division duplex (FDD) system, forward link 1218 can utilize a different frequency band than that used by reverse link 1220, and forward link 1224 can employ a different frequency band than that employed by reverse link 1226, for example. Further, in a time division duplex (TDD) system, forward link 1218 and reverse link 1220 can utilize a common frequency band and forward link 1224 and reverse link 1226 can utilize a common frequency band.

Each group of antennas and/or the area in which they are designated to communicate can be referred to as a sector of base station 1202. For example, antenna groups can be designed to communicate to mobile devices in a sector of the areas covered by base station 1202. In communication over forward links 1218 and 1224, the transmitting antennas of base station 1202 can utilize beamforming to improve signal-to-noise ratio of forward links 1218 and 1224 for mobile devices 1216 and 1222. Also, while base station 1202 utilizes beamforming to transmit to mobile devices 1216 and 1222 scattered randomly through an associated coverage, mobile devices in neighboring cells can be subject to less interference as compared to a base station transmitting through a single antenna to all its mobile devices. Moreover, mobile devices 1216 and 1222 can communicate directly with one another using a peer-to-peer or ad hoc technology (not shown).

According to an example, system 1200 can be a multiple-input multiple-output (MIMO) communication system. Further, system 1200 can utilize substantially any type of duplexing technique to divide communication channels (*e.g*., forward link, reverse link, ...) such as FDD, FDM, TDD, TDM, CDM, and the like. In addition, communication channels can be orthogonalized to allow simultaneous communication with multiple devices over the channels; in one example, OFDM can be utilized in this regard. Thus, the channels can be divided into portions of frequency over a period of time. In addition, frames can be defined as the portions of frequency over a collection of time periods; thus, for example, a frame can comprise a number of OFDM symbols. The base station 1202 can communicate to the mobile devices 1216 and 1222 over the channels, which can be create for various types of data. For example, channels can be created for communicating various types of general communication data, control data (*e.g.*, quality information for other channels, acknowledgement indicators for data received over channels, interference information, reference signals, *etc*.), and/or the like.

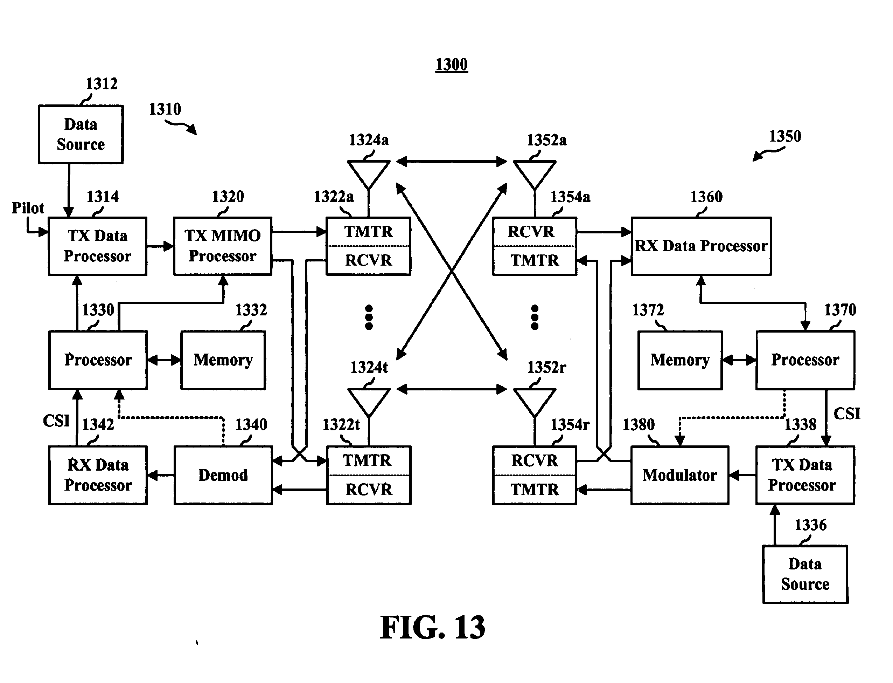

**Fig. 13** shows an example wireless communication system 1300. The wireless communication system 1300 depicts one base station 1310 and one mobile device 1350 for sake of brevity. However, it is to be appreciated that system 1300 can include more than one base station and/or more than one mobile device, wherein additional base stations and/or mobile devices can be substantially similar or different from example base station 1310 and mobile device 1350 described below. In addition, it is to be appreciated that base station 1310 and/or mobile device 1350 can employ the systems (**Figs. 1-7** **and 12**), protocol stacks (**Fig. 8-9**) and/or methods (**Figs. 10-11**) described herein to facilitate wireless communication therebetween.

At base station 1310, traffic data for a number of data streams is provided from a data source 1312 to a transmit (TX) data processor 1314. According to an example, each data stream can be transmitted over a respective antenna. TX data processor 1314 formats, codes, and interleaves the traffic data stream based on a particular coding scheme selected for that data stream to provide coded data.

The coded data for each data stream can be multiplexed with pilot data using orthogonal frequency division multiplexing (OFDM) techniques. Additionally or alternatively, the pilot symbols can be frequency division multiplexed (FDM), time division multiplexed (TDM), or code division multiplexed (CDM). The pilot data is typically a known data pattern that is processed in a known manner and can be used at mobile device 1350 to estimate channel response. The multiplexed pilot and coded data for each data stream can be modulated (*e.g*., symbol mapped) based on a particular modulation scheme (*e.g*., binary phase-shift keying (BPSK), quadrature phase-shift keying (QPSK), M-phase-shift keying (M-PSK), M-quadrature amplitude modulation (M-QAM), *etc*.) selected for that data stream to provide modulation symbols. The data rate, coding, and modulation for each data stream can be determined by instructions performed or provided by processor 1330.

The modulation symbols for the data streams can be provided to a TX MIMO processor 1320, which can further process the modulation symbols (*e.g*., for OFDM). TX MIMO processor 1320 then provides *N_{T}* modulation symbol streams to *N_{T}* transmitters (TMTR) 1322a through 1322t. In various aspects, TX MIMO processor 1320 applies beamforming weights to the symbols of the data streams and to the antenna from which the symbol is being transmitted.

Each transmitter 1322 receives and processes a respective symbol stream to provide one or more analog signals, and further conditions (*e.g*., amplifies, filters, and upconverts) the analog signals to provide a modulated signal suitable for transmission over the MIMO channel. Further, *N_{T}* modulated signals from transmitters 1322a through 1322t are transmitted from *N_{T}* antennas 1324a through 1324t, respectively.

At mobile device 1350, the transmitted modulated signals are received by *N_{R}* antennas 1352a through 1352r and the received signal from each antenna 1352 is provided to a respective receiver (RCVR) 1354a through 1354r. Each receiver 1354 conditions (*e.g*., filters, amplifies, and downconverts) a respective signal, digitizes the conditioned signal to provide samples, and further processes the samples to provide a corresponding "received" symbol stream.

An RX data processor 1360 can receive and process the *N_{R}* received symbol streams from *N_{R}* receivers 1354 based on a particular receiver processing technique to provide *N_{T}* "detected" symbol streams. RX data processor 1360 can demodulate, deinterleave, and decode each detected symbol stream to recover the traffic data for the data stream. The processing by RX data processor 1360 is complementary to that performed by TX MIMO processor 1320 and TX data processor 1314 at base station 1310.

A processor 1370 can periodically determine which precoding matrix to utilize as discussed above. Further, processor 1370 can formulate a reverse link message comprising a matrix index portion and a rank value portion.

The reverse link message can comprise various types of information regarding the communication link and/or the received data stream. The reverse link message can be processed by a TX data processor 1338, which also receives traffic data for a number of data streams from a data source 1336, modulated by a modulator 1380, conditioned by transmitters 1354a through 1354r, and transmitted back to base station 1310.

At base station 1310, the modulated signals from mobile device 1350 are received by antennas 1324, conditioned by receivers 1322, demodulated by a demodulator 1340, and processed by a RX data processor 1342 to extract the reverse link message transmitted by mobile device 1350. Further, processor 1330 can process the extracted message to determine which precoding matrix to use for determining the beamforming weights.

Processors 1330 and 1370 can direct (*e.g*., control, coordinate, manage, *etc*.) operation at base station 1310 and mobile device 1350, respectively. Respective processors 1330 and 1370 can be associated with memory 1332 and 1372 that store program codes and data. Processors 1330 and 1370 can also perform computations to derive frequency and impulse response estimates for the uplink and downlink, respectively.

It is to be understood that the aspects described herein can be implemented in hardware, software, firmware, middleware, microcode, or any combination thereof. For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

When the aspects are implemented in software, firmware, middleware or microcode, program code or code segments, they can be stored in a machine-readable medium, such as a storage component. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, *etc*. can be passed, forwarded, or transmitted using any suitable means including memory sharing, message passing, token passing, network transmission, *etc*.

For a software implementation, the techniques described herein can be implemented with modules (*e.g*., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

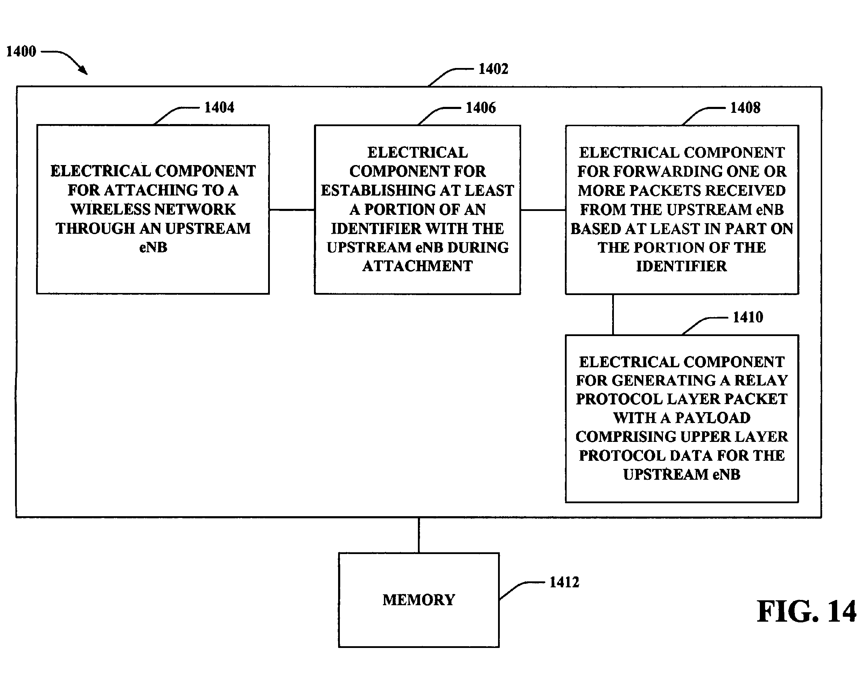

With reference to **Fig. 14**, illustrated is a system 1400 that facilitates establishing an identifier during a wireless network attachment procedure. For example, system 1400 can reside at least partially within a base station, mobile device, *etc.* It is to be appreciated that system 1400 is represented as including functional blocks, which can be functional blocks that represent functions implemented by a processor, software, or combination thereof (*e.g*., firmware). System 1400 includes a logical grouping 1402 of electrical components that can act in conjunction. For instance, logical grouping 1402 can include an electrical component for attaching to a wireless network through an upstream eNB 1404. For example, as described, the attachment procedure can be initiated through one or more intermediary relay eNBs to a donor eNB and can be similar to a UE attachment procedure. Additionally, logical grouping 1402 can include an electrical component for establishing at least a portion of an identifier with the upstream eNB during attachment 1406. The portion of the identifier, as described, can relate to a TEID, relay identifier for use in relay protocol communications, and/or the like.

Furthermore, the portion of the identifier, as described, can facilitate subsequent routing of packets from donor eNB through the intermediary relay eNBs, if present. Moreover, logical grouping 1402 can include an electrical component for forwarding one or more packets received from the upstream eNB based at least in part on the portion of the identifier 1408. In addition, logical grouping 1402 can include an electrical component for generating a relay protocol layer packet with a payload comprising upper layer protocol data for the upstream eNB 1410. It is to be appreciated that electrical component 1410 can include the identifier in the header of the relay protocol layer packet. Additionally, system 1400 can include a memory 1412 that retains instructions for executing functions associated with electrical components 1404, 1406, 1408, and 1410. While shown as being external to memory 1412, it is to be understood that one or more of electrical components 1404, 1406, 1408, and 1410 can exist within memory 1412.

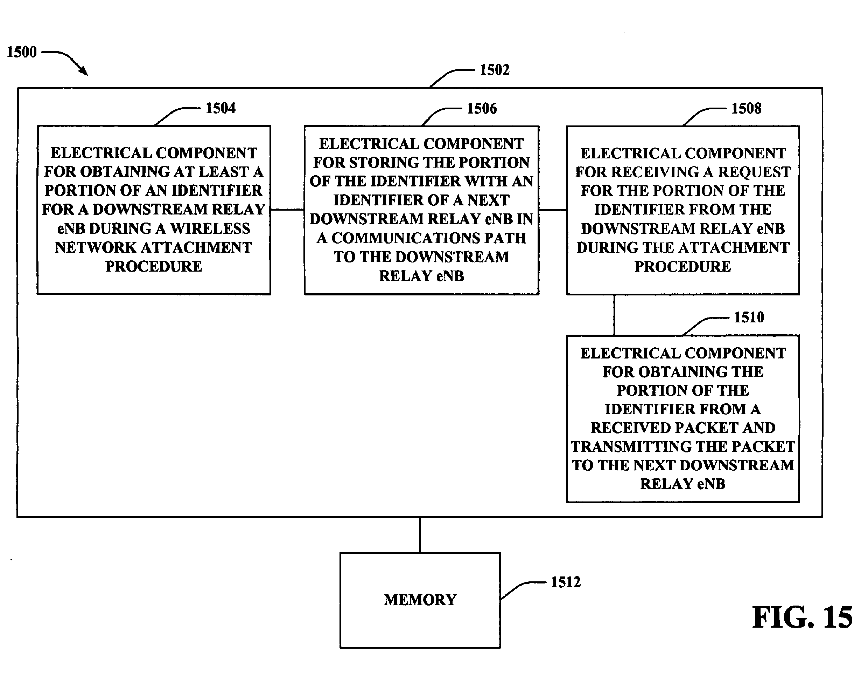

With reference to **Fig. 15**, illustrated is a system 1500 that facilitates assigning a relay eNB identifier during a wireless network attachment procedure to facilitate subsequent packet routing to the relay eNB. For example, system 1500 can reside at least partially within a base station, mobile device, *etc.* It is to be appreciated that system 1500 is represented as including functional blocks, which can be functional blocks that represent functions implemented by a processor, software, or combination thereof (*e.g*., firmware). System 1500 includes a logical grouping 1502 of electrical components that can act in conjunction. For instance, logical grouping 1502 can include an electrical component for obtaining at least a portion of an identifier for a downstream relay eNB during a wireless network attachment procedure 1504. For example, as described, the portion of the identifier can be generated (*e.g*., based on a request from the downstream relay eNB), received from an upstream eNB, and/or the like. Additionally, logical grouping 1502 can include an electrical component for storing the portion of the identifier with an identifier of a next downstream relay eNB in a communications path to the downstream relay eNB 1506. For example, the identifiers can be associated in a routing table to facilitate subsequent packet routing to the downstream relay eNB *via* the next downstream relay eNB. It is to be appreciated, as described, that electrical component 1504 can additionally transmit the identifier to the next downstream relay eNB for similar storage and forwarding of the identifier.

Moreover, logical grouping 1502 can include an electrical component for receiving a request for the portion of the identifier from the downstream relay eNB during the attachment procedure 1508. In addition, logical grouping 1502 can include an electrical component for obtaining the portion of the identifier from a received packet and transmitting the packet to the next downstream relay eNB 1510. As described, this facilitates packet routing based on the identifier. Additionally, system 1500 can include a memory 1512 that retains instructions for executing functions associated with electrical components 1504, 1506, 1508, and 1510. While shown as being external to memory 1512, it is to be understood that one or more of electrical components 1504, 1506, 1508, and 1510 can exist within memory 1512.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise. Furthermore, to the extent that the term "includes" is used in either the detailed description or the claims, such term is intended to be inclusive in a manner similar to the term "comprising" as "comprising" is interpreted when employed as a transitional word in a claim. Furthermore, although elements of the described aspects and/or aspects may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method, comprising:
initiating an attachment procedure of a cell relay to a wireless network using an upstream evolved Node B eNB, hereinafter called eNB,
establishing at least a portion of an identifier with the upstream eNB during the attachment procedure, wherein the said identifier is a cell relay identifier which is uniquely assigned to the attached cell relay during the attachment procedure; and
receiving one or more packets from the upstream eNB based at least in part on the portion of the said identifier.

2. The method of claim 1, further comprising requesting establishment of the portion of the identifier from the upstream eNB.

3. The method of claim 2, wherein the establishing the portion of the identifier includes receiving a response to the requesting establishment of the identifier from the upstream eNB.

4. The method of claim 3, wherein the identifier is a tunnel endpoint identifier (TEID).

5. The method of claim 2, wherein the requesting establishing of the identifier includes requesting establishment of a specific identifier.

6. The method of claim 5, further comprising receiving a response from the upstream eNB indicating whether the specific identifier can be utilized.

7. The method of claim 1, further comprising generating a relay protocol layer packet for communicating to the upstream eNB.

8. An apparatus, comprising:
means for attaching a cell relay to a wireless network through an upstream evolved Node B, hereinafter called eNB;
means for establishing at least a portion of an identifier with the upstream eNB during attachment, wherein the said identifier is a cell relay identifier which is uniquely assigned to the attached cell relay during the attachment procedure; and
means for forwarding one or more packets received from the upstream eNB based at least in part on the portion of the said identifier.

9. A computer program product, comprising:
a computer-readable medium comprising:
code for causing at least one computer to initiate an attachment procedure of a cell relay to a wireless network using an upstream evolved Node B hereinafter called eNB;
code for causing the at least one computer to establish at least a portion of an identifier with the upstream eNB during the attachment procedure, wherein the said identifier is a cell relay identifier which is uniquely assigned to the attached cell relay during the attachment procedure; and
code for causing the at least one computer to receive one or more packets from the upstream eNB based at least in part on the portion of the identifier.

10. A method, comprising:
obtaining at least a portion of an identifier for a downstream relay evolved Node B hereinafter called eNB during an attachment procedure for the downstream relay eNB to a wireless network;
storing the portion of the identifier in a routing table with an identifier for a next downstream relay eNB in a communication path to the downstream relay eNB; and
transmitting the portion of the identifier to the next downstream relay eNB as part of the attachment procedure.

11. The method of claim 10, wherein obtaining the portion of the identifier includes generating the portion of the identifier for the downstream relay eNB or receiving the portion of the identifier from an upstream eNB.

12. The method of claim 10, further comprising:
obtaining the portion of the identifier from a received packet;
locating the identifier of the next downstream relay eNB in the routing table as related to the portion of the identifier; and
transmitting the received packet to the next downstream relay eNB.

13. The method of claim 12, wherein the obtaining the portion of the identifier includes obtaining the portion of the identifier from a header of the received packet where the received packet is a relay protocol layer packet.

14. An apparatus, comprising:
means for obtaining at least a portion of an identifier for a downstream relay evolved Node B hereinafter called or eNB during a wireless network attachment procedure; and
means for storing the portion of the identifier with an identifier of a next downstream relay eNB in a communications path to the downstream relay eNB in a routing table, wherein the means for obtaining further forwards the portion of the identifier to the next downstream relay eNB.

15. A computer program product, comprising:
a computer-readable medium comprising:
code for causing at least one computer to obtain at least a portion of an identifier for a downstream relay evolved Node B hereinafter called eNB during an attachment procedure for the downstream relay eNB to a wireless network;
code for causing the at least one computer to store the portion of the identifier in a routing table with an identifier for a next downstream relay eNB in a communication path to the downstream relay eNB; and
code for causing the at least one computer to transmit the portion of the identifier to the next downstream relay eNB as part of the attachment procedure.

## Patentansprüche

1. Verfahren aufweisend:
Einleiten eines Verbindungsaufnahme-Prozesses eines Zellen-Relays zu einem drahtlosen Netzwerk mit Hilfe eines vorgelagerten Evolved-Node B, nachfolgend genannt eNB;
Einrichten zumindest eines Teils eines Identifikators mit dem vorgelagerten eNB während des Verbindungsaufnahme-Prozesses, wobei der Identifikator ein Zellen-Relay-Identifikator ist, welcher eindeutig zu dem verbundenen Zellen-Relay während des Verbindungsaufnahme-Prozesses zugeordnet ist; und
Empfangen eines oder mehrerer Pakete von dem vorgelagerten eNB basierend zumindest teilweise auf dem Teil des Identifikators.

2. Verfahren nach Anspruch 1, weiter aufweisend Anfordern von Einrichtung des Teils des Identifikators von dem vorgelagerten eNB.

3. Verfahren nach Anspruch 2, wobei das Einrichten des Teiles des Identifikators Empfangen einer Rückmeldung auf das Anfordern von Einrichtung des Identifikators von dem vorgelagerten eNB umfasst.

4. Verfahren nach Anspruch 3, wobei der Identifikator ein Tunnel Endpunkt Identifikator (TEID) ist.

5. Verfahren nach Anspruch 2, wobei das Anfordern von Einrichten des Identifikators Anfordern von Einrichtung eines spezifischen Identifikators umfasst.

6. Verfahren nach Anspruch 5, weiter aufweisend Empfangen einer Rückmeldung von dem vorgelagerten eNB, welche anzeigt, ob der spezifische Identifikator verwendet werden kann.

7. Verfahren nach Anspruch 1, weiter aufweisend Erzeugen eines Relay-Protokoll-Layer-Pakets zum Kommunizieren mit dem vorgelagerten eNB.

8. Vorrichtung aufweisend:
Mittel zum Aufnehmen von Verbindung eines Zellen-Relays zu einem drahtlosen Netzwerk durch ein vorgelagertes Evolved-Node B, nachfolgend genannt eNB;
Mittel zum Einrichten zumindest eines Teils eines Identifikators mit dem vorgelagerten eNB während der Verbindungsaufnahme, wobei der Identifikator ein Zellen-Relay-Identifikator ist, welcher eindeutig zu dem verbundenen Zellen-Relay während des Verbindungsaufnahme-Prozesses zugeordnet ist; und
Mittel zum Weiterleiten eines oder mehrerer Pakete, welche von dem vorgelagerten eNB empfangen sind, basierend zumindest teilweise auf dem Teil des Identifikators.

9. Computerprogrammprodukt aufweisend:
ein computerlesbares Medium aufweisend:
Code zum Veranlassen zumindest eines Computers zum Einleiten eines Verbindungsaufnahme-Prozesses eines Zellen-Relays zu einem drahtlosem Netzwerk mit Hilfe eines vorgelagerten Evolved-Node B, nachfolgend genannt eNB;
Code zum Veranlassen des zumindest einen Computers zum Einrichten zumindest eines Teils eines Identifikators mit dem vorgelagerten eNB während des Verbindungsaufnahme-Prozesses, wobei der Identifikator ein Zellen-Relay-Identifikator ist, welcher eindeutig zu dem verbundenen Zellen-Relay während des Verbindungsaufnahme-Prozesses zugeordnet ist; und
Code zum Veranlassen des zumindest einen Computers zum Empfangen eines oder mehrerer Pakete von dem vorgelagerten eNB basierend zumindest teilweise auf dem Teil des Identifikators.

10. Verfahren aufweisend:
Erhalten zumindest eines Teils eines Identifikators für ein nachgelagertes Relay-Evolved-Node B, nachfolgend genannt eNB, während eines Verbindungsaufnahme-Prozesses für das nachgelagerte Relay-eNB zu einem drahtlosen Netzwerk;
Speichern des Teils des Identifikators in einer Routingtabelle mit einem Identifikator für ein nächstes nachgelagertes Relay-eNB in einem Kommunikations-Pfad zu dem nachgelagerten Relay-eNB; und
Übermitteln des Teils des Identifikators zu dem nächsten nachgelagerten Relay-eNB als Abschnitt des Verbindungsaufnahme-Prozesses.

11. Verfahren nach Anspruch 10, wobei das Erhalten des Teils des Identifikators Erzeugen des Teils des Identifikators für das nachgelagerte Relay-eNB oder Empfangen des Teils des Identifikator von einem vorgelagerten eNB umfasst.

12. Verfahren nach Anspruch 10, weiter aufweisend:
Erhalten des Teils des Identifikators aus einem empfangenen Paket;
Auffinden des Identifikators des nächsten nachgelagerten Relay-eNB in der Routingtabelle in Bezug auf den Teil des Identifikators; und
Übermitteln des empfangenen Paktes zu dem nächsten nachgelagerten Relay-eNB.

13. Verfahren nach Anspruch 12, wobei das Erhalten des Teils des Identifikators Erhalten des Teils des Identifikators aus einem Header des empfangenen Pakets umfasst, wobei das empfangene Paket ein Relay-Protokoll-Layer-Paket ist.

14. Vorrichtung aufweisend:
Mittel zum Erhalten zumindest eines Teils eines Identifikators für ein nachgelagertes Relay-Evolved-Node B, nachfolgend genannt eNB, während eines Verbindungsaufnahme-Prozesses zu einem drahtlosen Netzwerk;
Mittel zum Speichern des Teils des Identifikators mit einem Identifikator eines nächsten nachgelagerten Relay-eNB in einem Kommunikations-Pfad zu dem nachgelagerten Relay-eNB in einer Routingtabelle, wobei das Mittel zum Erhalten weiter den Teil des Identifikators zu dem nächsten nachgelagerten Relay-eNB weiterleiten.

15. Computerprogrammprodukt aufweisend:
ein computerlesbares Medium aufweisend:
Code zum Veranlassen zumindest eines Computers zum Erhalten zumindest eines Teils eines Identifikators für ein nachgelagertes Relay-Evolved-Node B, nachfolgend genannt eNB, während eines Verbindungsaufnahme-Prozesses für das nachgelagerte Relay-eNB zu einem drahtlosen Netzwerk;
Code zum Veranlassen des zumindest einen Computers zum Speichern des Teils des Identifikators in einer Routingtabelle mit einem Identifikator für ein nächstes nachgelagertes Relay-eNB in einem Kommunikations-Pfad zu dem nachgelagerten Relay-eNB; und
Code zum Veranlassen des zumindest einen Computers zum Übermitteln des Teils des Identifikators zu dem nächsten nachgelagerten Relay-eNB als Abschnitt des Verbindungsaufnahme-Prozesses.

## Revendications

1. Un procédé, comprenant:
l'initiation d'une procédure de rattachement d'un relais cellulaire à un réseau sans fil en utilisant un Node B évolué, ci-après désigné eNB, amont ;
l'établissement d'au moins une partie d'un identifiant avec le eNB amont durant la procédure de rattachement, ledit identifiant étant un identifiant de relais cellulaire qui est attribué de façon unique au relais cellulaire rattaché durant la procédure de rattachement ; et
la réception d'un ou plusieurs paquets en provenance du eNB amont en fonction au moins partiellement de la partie dudit identifiant.

2. Le procédé de la revendication 1, comprenant en outre : la requête d'établissement de la partie de l'identifiant en provenance du eNB amont.

3. Le procédé de la revendication 2, dans lequel l'établissement de la partie de l'identifiant comprend la réception d'une réponse à la requête de l'établissement de l'identifiant depuis le eNB amont.

4. Le procédé de la revendication 3, dans lequel l'identifiant est un identifiant de point d'extrémité tunnel (TEID).

5. Le procédé de la revendication 2, dans lequel la requête d'établissement de l'identifiant inclut la requête de l'établissement d'un identifiant spécifique.

6. Le procédé de la revendication 5, comprenant en outre la réception d'une réponse en provenance du eNB amont indiquant si l'identifiant spécifique peut ou non être utilisé.

7. Le procédé de la revendication 1, comprenant en outre la génération d'un paquet de couche de protocole relais pour communiquer avec le eNB amont.

8. Un dispositif, comprenant :
des moyens pour rattacher un relais cellulaire à un réseau sans fil via un Node B évolué, ci-après désigné eNB, amont ;
des moyens d'établissement d'au moins une partie d'un identifiant avec le eNB durant le rattachement, ledit identifiant étant un identifiant de relais cellulaire qui est attribué de façon unique au relais cellulaire rattaché durant la procédure de rattachement ; et
des moyens d'envoi d'un ou plusieurs paquets reçus du eNB amont au moins en partie en fonction de la partie dudit identifiant.

9. Un programme-produit informatique, comprenant :
un support lisible par calculateur comprenant :
du code pour faire en sorte qu'au moins un calculateur initie une procédure de rattachement d'un relais cellulaire à un réseau sans fil en utilisant un Node B évolué, ci-après désigné eNB, amont ;
du code pour faire en sorte qu'au moins un calculateur établisse au moins une partie d'un identifiant avec le eNB amont durant la procédure de rattachement, ledit identifiant étant un identifiant de relais cellulaire qui est attribué de façon unique au relais cellulaire rattaché durant la procédure de rattachement ; et
du code pour faire en sorte qu'au moins un calculateur reçoive un ou plusieurs paquets en provenance du eNB amont en fonction au moins partiellement de la partie dudit identifiant.

10. Un procédé, comprenant :
l'obtention d'au moins une partie d'un identifiant pour un Node B évolué, ci-après désigné eNB, de relais aval durant une procédure de rattachement pour le eNB de relais aval vers un réseau sans fil ;
la mémorisation de la partie de l'identifiant dans une table de routage avec un identifiant pour un eNB de relais suivant dans un chemin de communication vers le eNB de relais aval ; et
l'émission de la partie de l'identifiant vers le eNB de relais aval suivant en tant que partie de la procédure de rattachement.

11. Le procédé de la revendication 10, dans lequel l'obtention de la partie de l'identifiant comprend la génération de la partie de l'identifiant pour le eNB de relais aval ou la réception de la partie de l'identifiant depuis un eNB amont.

12. Le procédé de la revendication 10, comprenant en outre :
l'obtention de la partie de l'identifiant à partir d'un paquet reçu ;
la localisation de l'identifiant du eNB de relais aval suivant dans la table de routage en relation avec le partie de l'identifiant ; et
l'émission du paquet reçu vers le eNB de relais aval suivant.

13. Le procédé de la revendication 12, dans lequel l'obtention de la partie de l'identifiant comprend l'obtention de la partie de l'identifiant à partir d'un en-tête du paquet reçu, où le paquet reçu est un paquet de couche de protocole relais.

14. Un dispositif comprenant :
des moyens d'obtention d'au moins une partie d'un identifiant pour un Node B évolué, ci-après désigné eNB, de relais aval durant une procédure de rattachement de réseau sans fil ; et
des moyens de stockage de la partie de l'identifiant avec un identifiant d'un eNB de relais aval suivant dans un trajet de communication vers le eNB de relais aval dans une table de routage, les moyens d'obtention transmettant en outre la partie de l'identifiant vers le eNB de relais aval suivant.

15. Un programme-produit informatique, comprenant :
un support lisible par calculateur comprenant :
du code pour faire en sorte qu'au moins un calculateur obtienne au moins une partie d'un identifiant pour un Node B évolué, ci-après désigné eNB, de relais aval durant une procédure de rattachement pour le eNB de relais aval à un réseau sans fil ;
du code pour faire en sorte que le au moins un calculateur mémorise la partie de l'identifiant dans une table de routage avec un identifiant pour un eNB de relais aval suivant dans un trajet de communication vers le eNB de relais aval ; et
du code pour faire en sorte que le au moins un calculateur émette la partie de l'identifiant vers le eNB de relais aval en tant que partie de la procédure de rattachement.
